# EUROPEAN PATENT APPLICATION

(11) **EP 3 854 620 A1**
(43) Date of publication of application: **28.07.2021**
(21) Application number: 20215888.7
(22) Date of filing: 21.12.2020
(51) Int. Cl.: B60K 28/06, B60W 30/095

(54) **VEHICLE CONTROLLER, AND VEHICLE**

(30) Priority: 27.01.2020 JP 2020010827
(71) Applicant: MAZDA MOTOR CORPORATION, Hiroshima 730-8670 (JP)
(72) Inventor: TSUJI, Yuta, Fuchu-cho, Aki-gun,, Hiroshima 730-8670 (JP); FUNAKUBO, Akira, Fuchu-cho, Aki-gun,, Hiroshima 730-8670 (JP); KAGAMI, Koji, Fuchu-cho, Aki-gun,, Hiroshima 730-8670 (JP); FUKUBA, Hitoshi, Fuchu-cho, Aki-gun,, Hiroshima 730-8670 (JP)
(74) Representative: Müller-Boré & Partner Patentanwälte PartG mbB

(57) **Abstract**

A vehicle controller (10) includes: a storage section (20) that stores road information on a road; and a control section (100) that executes evacuation travel control for generating an evacuation route to evacuate the vehicle to an evacuation position (H1, H2, H3, H4, H5, H6, H7, H8, H9) in a road shoulder area (R, R11, R22, R24) along an end of a road in a width direction on the basis of the road information stored in the storage section (20) and controlling travel of the vehicle such that the vehicle travels on the evacuation route while avoiding an on-road obstacle in the case where abnormality occurs to a driver. In the case where the vehicle does not reach the evacuation position (H1, H2, H3, H4, H5, H6, H7, H8, H9) within a specified target time from initiation of the evacuation travel control, the control section (100) stops the vehicle in a travel lane.

## Description

### [Technical Field]

A technique disclosed herein belongs to a vehicle controller and a vehicle.

### [Background Art]

A travel controller for stopping a vehicle at the safest place as possible at the time when a physical condition of a driver worsens or abnormality occurs to a controller of an automobile has been known.

For example, a vehicle controller is disclosed in Patent document 1. The vehicle controller includes an emergency stop unit that stops the vehicle regardless of a brake operation by the driver, and stops the vehicle while changing steering of the vehicle according to surrounding environment of a position at which the vehicle is stopped in the case where a driver state detection section detects worsening of the driver state.

### [Prior Art Documents]

### [Patent documents]

[Patent document 1] Japanese Patent No. 5,569,602

### [Summary]

### [Problem to be solved]

However, a surrounding traffic condition changes from moment to moment. Thus, there is a case where it is difficult for the vehicle to travel in a selected travel pattern and where it is difficult to stop the vehicle at a set position. In such a case, it is assumed to search for a new stop position. However, there is a problem that a time required to stop the vehicle is extended in the case where it is difficult to set the stop position due to the traffic condition or the like.

A technique disclosed herein has been made in view of such a point and therefore has a purpose of avoiding extension of a time required to stop a vehicle emergently.

### [Means for solving the Problem]

In order to solve the above problem, a technique disclosed herein provides a vehicle controller that includes: a storage section that stores road information on a road ahead of the vehicle in an advancing direction; and a control section that executes evacuation travel control for generating an evacuation route to evacuate the vehicle to an evacuation position in a road shoulder area along an end of a road in a width direction on the basis of the road information stored in the storage section and controlling travel of the vehicle such that the vehicle travels on the evacuation route while avoiding an on-road obstacle in the case where abnormality occurs to a driver of the vehicle. The control section is configured to stop the vehicle in a travel lane in the case where the vehicle does not reach the evacuation position within a specified target time from initiation of the evacuation travel control.

With such a configuration, for example, in the case where the vehicle is stopped emergently, it is possible to appropriately determine whether to stop the vehicle in the road shoulder area or to stop the vehicle in the travel lane. In this way, it is possible to avoid such a situation where it takes longer than expected to stop the vehicle or it is difficult to promptly stop the vehicle. That is, it is possible to avoid extension of the time required to stop the vehicle emergently.

The evacuation position may be set in the road shoulder area within a range where the vehicle can reach when traveling for a specified time or a specified distance in an advancing direction from initiation of the evacuation travel control.

Just as described, by limiting the range where the evacuation position is set, it is possible to reduce a calculation amount. Thus, it is possible to reduce resources used for the calculation and to accelerate calculation processing.

In the above vehicle controller, in the evacuation travel control, the control section may execute: a first step of decelerating a speed of the vehicle to a specified speed or lower; a second step of changing a travel lane of the vehicle to a first travel lane in the case where the vehicle travels in the travel lane other than the first travel lane that is next to the road shoulder area; a third step of causing the vehicle to travel in the first travel lane at the specified speed or lower; and a fourth step of causing the vehicle to enter the road shoulder area from the first travel lane and stopping the vehicle. The control section may set an intermediate target time in the second step and/or the third step. In the case where the corresponding step is not terminated in the intermediate target time, the control section may cancel the step and stop the vehicle in the travel lane.

Just as described, the intermediate target time is set. Accordingly, in the case where it is difficult to stop the vehicle in the road shoulder area, a determination to stop the vehicle in the travel lane can be made promptly.

### [Advantage]

As it has been described so far, according to the technique disclosed herein, it is possible to avoid the extension of the time required to stop the vehicle emergently.

### [Brief Description of the Drawings]

[Fig. 1] Fig. 1 is a block diagram schematically illustrating an exemplary travel controller.
[Fig. 2A] Fig. 2A is a flowchart for illustrating emergency stop position setting operation.
[Fig. 2B] Fig. 2B is a flowchart for illustrating analysis processing of a road shoulder area.
[Fig. 2C] Fig. 2C is a flowchart illustrating processing operation of a stop position setting step.
[Fig. 3A] Fig. 3A is a flowchart illustrating processing operation by a control section at the time of an emergency stop of a vehicle.
[Fig. 3B] Fig. 3B is a flowchart illustrating processing operation in a deceleration step.
[Fig. 3C] Fig. 3C is a flowchart illustrating processing operation in a lane change step.
[Fig. 3D] Fig. 3D is a flowchart illustrating processing operation in a first travel lane travel step and a stop step.
[Fig. 4] Fig. 4 is a view for illustrating the analysis processing of the road shoulder area.
[Fig. 5] Fig. 5 is a table for illustrating emergency stop position setting processing.
[Fig. 6] Fig. 6 is a schematic view illustrating a travel scene of the vehicle and illustrates an example of a scene where the vehicle can be stopped at a first candidate stop position.
[Fig. 7A] Fig. 7A illustrates an example of an analysis list that is created in the travel scene illustrated in Fig. 6.
[Fig. 7B] Fig. 7B illustrates an example of an analysis list that is created in a travel scene illustrated in Fig. 8.
[Fig. 7C] Fig. 7C illustrates an example of an analysis list that is created in a travel scene illustrated in Fig. 9.
[Fig. 7D] Fig. 7D illustrates an example of an analysis list that is created in a travel scene illustrated in Fig. 10.
[Fig. 7E] Fig. 7E illustrates an example of an analysis list that is created in a travel scene illustrated in Fig. 11.
[Fig. 8] Fig. 8 is a schematic view illustrating a travel scene of the vehicle and illustrates an example of a scene where the vehicle cannot be stopped at the first candidate stop position.
[Fig. 9] Fig. 9 is a schematic view illustrating a travel scene of the vehicle and illustrates another example of the scene where the vehicle cannot be stopped at the first candidate stop position.
[Fig. 10A] Fig. 10A is a schematic view illustrating a travel scene of the vehicle and illustrates an example of a scene where the vehicle cannot be stopped at the first and second candidate stop positions.
[Fig. 10B] Fig. 10B is an enlarged view of an area near the emergency stop position in Fig. 10A.
[Fig. 11] Fig. 11 is a schematic view illustrating a travel scene of the vehicle and illustrates an example of a scene where the vehicle cannot be stopped in the road shoulder area.
[Fig. 12] Fig. 12 is a table presenting first risk values.
[Fig. 13] Fig. 13 is a table presenting second risk values.
[Fig. 14] Fig. 14 is a schematic view illustrating a travel scene of the vehicle and illustrates an example of a scene where the vehicle is stopped in a travel lane.

### [Embodiments for Carrying Out the Invention]

A detailed description will hereinafter be made on an exemplary embodiment with reference to the drawings. All of the features as shown in the drawings may not necessarily be essential. In the following description, an advancing travel side of a vehicle (an automobile in this embodiment) will simply be referred to as a front side, and a retreating travel side thereof will simply be referred to as a rear side. In addition, a left side that is seen at the time when the front side is seen from the rear side will be referred to as the left side, and an opposite side thereof will be referred to as a right side. Furthermore, the following description will be made on an assumption that the vehicle travels in a region of left-hand traffic.

### (Vehicle Control System)

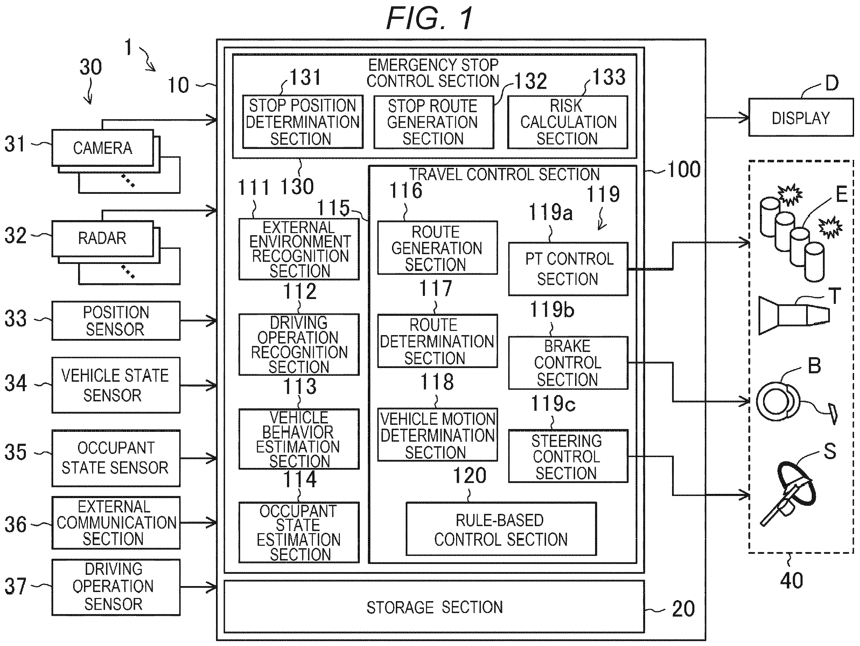

Fig. 1 exemplifies a configuration of a vehicle control system 1 according to the embodiment. The vehicle control system 1 is provided in a vehicle (more specifically, a four-wheeled motor vehicle). The vehicle can be switched among manual driving, assisted driving, and automated driving. The manual driving is driving in which the vehicle travels according to a driver's operation (for example, an operation of an accelerator pedal or the like). The assisted driving is driving in which the vehicle travels while the driver's operation is assisted. The automated driving is driving in which the vehicle travels without the driver' s operation. The vehicle control system 1 controls the vehicle in the assisted driving and the automated driving. More specifically, the vehicle control system 1 controls operation (particularly, travel) of the vehicle by controlling an actuator 40 that is provided in the vehicle.

The vehicle control system 1 includes an information acquisition section 30 and a vehicle controller 10. In the following description, the vehicle that is provided with the vehicle control system 1 will be described as a "host vehicle H", and another vehicle that exists around the host vehicle H will be described as the "other vehicle J".

### [Actuator]

The actuator 40 includes an actuator for a drive system, an actuator for a steering system, an actuator for a brake system, and the like. Examples of the actuator for the drive system are an engine E, a transmission T, and a motor. An example of the actuator for the brake system is a brake B. An example of the actuator for the steering system is a steering wheel S.

### [Information Acquisition Section]

The information acquisition section 30 acquires various types of information that are used for control of the vehicle. The information acquired by the information acquisition section 30 includes information on an obstacle on a road and environment information on outside of the vehicle (external environment information) used to generate a target route to a target position as a vehicle travel target. In this example, the information acquisition section 30 includes plural cameras 31, plural radars 32, a position sensor 33, a vehicle state sensor 34, an occupant state sensor 35, an external communication section 36, and a driving operation sensor 37.

### <Camera>

The plural cameras 31 each have a similar configuration. The plural cameras 31 are provided to the vehicle in a manner to surround the vehicle. The plural cameras 31 capture images of environment around the vehicle (including an on-road obstacle, hereinafter referred to as the external environment) and thereby acquire image data on the external environment. The image data that is acquired by each of the plural cameras 31 is transmitted to the vehicle controller 10. The image data captured by the camera 31 is an example of the external environment information.

In this example, each of the plural cameras 31 is a monocular camera having a wide-angle lens. For example, the camera 31 is configured by using solid-state imaging elements such as a charge-coupled device (CCD) and a complementary metal-oxide-semiconductor (CMOS). The camera 31 may be a monocular camera having a narrow-angle lens or a stereo camera having a wide-angle lens or a narrow-angle lens.

### <Radar>

The plural radars 32 each have a similar configuration. The plural radars 32 are provided to the vehicle in the manner to surround the vehicle. The plural radars 32 detect the external environment. More specifically, the radar 32 emits a radio wave toward the external environment, receives a reflected wave from the external environment, and thereby detects the external environment. Detection results of the plural radars 32 are transmitted to the vehicle controller 10.

For example, the radar 32 may be a millimeter-wave radar that emits a millimeter wave, a lidar (light detection and ranging) that emits a laser beam, an infrared sensor that radiates infrared light, or an ultrasonic sensor that emits an ultrasonic wave. The detection result of the radar 32 is an example of the external environment information.

### <Position Sensor>

The position sensor 33 detects a position (for example, a latitude and a longitude) of the vehicle. For example, the position sensor 33 receives GPS information from the Global Positioning System and detects the position of the vehicle on the basis of the GPS information. The information (the position of the vehicle) that is acquired by the position sensor 33 is transmitted to the vehicle controller 10. The position of the vehicle that is detected by the position sensor 33 is an example of the external environment information.

### <Vehicle State Sensor>

The vehicle state sensor 34 detects a state (for example, a speed, acceleration, a yaw rate, and the like) of the vehicle. For example, the vehicle state sensor 34 includes: a vehicle speed sensor that detects the speed of the vehicle; an acceleration sensor that detects the acceleration of the vehicle; and a yaw rate sensor that detects the yaw rate of the vehicle. The information (the state of the vehicle) that is acquired by the vehicle state sensor 34 is transmitted to the vehicle controller 10.

### <Occupant State Sensor>

The occupant state sensor 35 detects a state of the driver who drives the vehicle (for example, body behavior, biological information, and the like of the driver) . The information (the state of the driver) that is acquired by the occupant state sensor 35 is transmitted to the vehicle controller 10. Although not illustrated, the occupant state sensor 35 includes an in-vehicle camera, a biological information sensor, and the like, for example. The in-vehicle camera is provided inside the vehicle. The in-vehicle camera acquires image data including the driver's eyeballs by capturing an image of an area including the driver's eyeballs. The image data that is acquired by the in-vehicle camera is transmitted to the vehicle controller 10. For example, the in-vehicle camera is arranged in front of the driver, and is set to have such an imaging area that the driver's eyeballs are positioned within the imaging area. The in-vehicle camera may be provided on goggles (not illustrated) worn by the driver. The biological information sensor detects the biological information (for example, sweating, heartbeats, a blood flow rate, a skin temperature, and the like) of the driver.

### <External Communication Section>

The external communication section 36 receives information through an external network (for example, the Internet or the like) that is provided outside the vehicle. For example, the external communication section 36 receives communication information from the other vehicle J located around the vehicle, car navigation data from a navigation system (not illustrated), traffic information, high-precision map information, and the like. The information that is acquired by the external communication section 36 is transmitted to the vehicle controller 10. The information such as the traffic information and the high-precision map information that is acquired by the external communication section 36 from the external network is an example of the external environment information.

### <Driving Operation Sensor>

The driving operation sensor 37 detects a driving operation on the vehicle. For example, the driving operation sensor 37 includes an accelerator pedal position sensor, a steering angle sensor, a brake hydraulic pressure sensor, and the like. The accelerator pedal position sensor detects an operation amount of the accelerator pedal of the vehicle. The steering angle sensor detects a steering angle of a steering wheel of the vehicle. The brake hydraulic pressure sensor detects an operation amount of the brake of the vehicle. The information (the vehicle driving operation) that is acquired by the driving operation sensor 37 is transmitted to the vehicle controller 10.

### [Vehicle Controller]

The vehicle controller 10 includes a control section 100 and a storage section 20. The vehicle controller 10 is electrically connected to the actuator 40 and each section (in this example, the information acquisition section 30 and the like) of the vehicle control system 1. The vehicle controller 10 controls the actuator 40 and each of the sections of the vehicle control system 1 on the basis of the information that is acquired from each of the sections of the vehicle control system 1.

In the assisted driving or the automated driving, the vehicle controller 10 determines the target route as a route on which the vehicle should travel, and controls operation of the actuator 40 such that the vehicle travels on the target route. For example, the vehicle controller 10 is constructed of one or plural electronic control units (ECUs). The electronic control unit may include a single integrated circuit (IC) or may include plural ICs. In the IC, a single core or die may be provided, or plural cooperative cores or dies may be provided. For example, the core or the die may include a processor (a CPU) and memory that stores a program for operating the CPU and information such as a processing result of the CPU. The memory is an example of the storage section 20. A specific description on the storage section 20 will be made later.

### [Control Section]

The vehicle controller 10 includes the control section 100. The control section 100 controls the operation of the actuator 40 on the basis of the various types of information that are acquired from the information acquisition section 30.

In this example, the control section 100 monitors a physical condition of the driver. The control section 100 executes normal travel control until an abnormal physical condition of the driver is detected. Then, when the abnormal physical condition of the driver is detected, the control section 100 stops the normal travel control and initiates evacuation travel control. In the normal travel control, the control section 100 selects the target route from plural route candidates, and controls the operation of the actuator 40 such that the vehicle travels on the target route. In the evacuation travel control, the control section 100 generates an evacuation route for evacuating the vehicle to an emergency stop position set in a road shoulder area R, and controls the operation of the actuator 40 such that the vehicle travels on the evacuation route. The emergency stop position is an example of an evacuation position.

The detailed methods of detecting the abnormal physical condition of the driver are not essential to define the invention. Various and/or known methods may be applied to the detection of the abnormal physical condition of the driver. Accordingly, the detailed methods of detecting the abnormal physical condition of the driver are not repeated in the present application.

Similarly, the detailed methods of generating the target route and the evacuation route are not essential to define the invention. Various and/or known methods may be applied to the generation of the target route and the evacuation route.

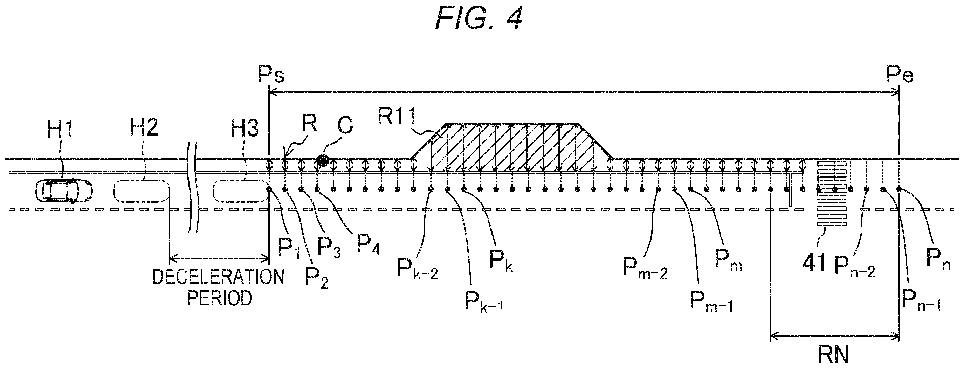

In the evacuation travel control, the control section 100 makes the vehicle travel without the driver's operation. That is, the evacuation travel control corresponds to the above-described automated driving. Here, the above abnormal physical condition means a state where a driving function of the driver is degraded due to a disease and is a state where it becomes difficult for the driver to keep driving the vehicle. Examples of such an abnormal physical condition are a brain disorder such as a cerebral stroke, a cardiac disorder such as myocardial infarction, epilepsy, and hypoglycemia. Here, the road shoulder area R in the present disclosure indicates, of a belt-like road that is provided near a road end along a travel road of the vehicle, an area where stopping of the vehicle is permitted such as a road shoulder or a side strip. In addition, the road shoulder area R includes a vehicle parking/stopping area (for example, see a shaded area R11 in Fig. 4) that is provided by increasing a width of a part of the road so as to allow the vehicle to park or stop near the road end of the travel road.

The control section 100 has an external environment recognition section 111, a driving operation recognition section 112, a vehicle behavior estimation section 113, an occupant state estimation section 114, a travel control section 115, and an emergency stop control section 130.

### <External Environment Recognition Section>

The external environment recognition section 111 recognizes the external environment of the vehicle on the basis of output of the plural cameras 31, output of the plural radars 32, output of the position sensor 33, output of the external communication section 36, and output of the vehicle behavior estimation section 113. The external environment recognition section 111 is an example of exterior environment recognition means.

For example, the external environment recognition section 111 generates the external environment information indicative of the external environment of the vehicle from the above output by using a learning model that is generated by deep learning. In the deep learning, a deep neural network is used. An example of the deep neural network is a convolutional neural network (CNN).

More specifically, the external environment recognition section 111 performs image processing on the image that is acquired by the camera 31, and thereby generates two-dimensional map data on an area such as the travel road where the vehicle can move. In addition, the external environment recognition section 111 acquires object information that is information on an object existing around the vehicle on the basis of the detection results of the radars 32. Based on the object information, the external environment recognition section 111 recognizes an on-road obstacle among the objects existing around the vehicle, and the on-road obstacle can be the obstacle in a process of traveling and stopping of the vehicle. Examples of the object are a mobile object that is displaced over time and a stationary object that is not displaced over time. Examples of the mobile object are a four-wheeled motor vehicle, a two-wheeled motor vehicle, a bicycle, and a pedestrian. Examples of the stationary object are a traffic sign, a roadside tree, a median strip, a center pole, and a building. The object information includes positional coordinates of the object, a speed of the object, and the like. Here, the external environment recognition section 111 may acquire the object information on the basis of the images acquired by the cameras 31 in addition to or instead of the detection results of the radars 32. Then, the external environment recognition section 111 integrates the two-dimensional map data and the object information, and thereby generates integrated map data (three-dimensional map data) on the external environment. The two-dimensional map data, the object information, and the integrated map data are examples of the external environment information.

### <Driving Operation Recognition Section>

The driving operation recognition section 112 recognizes the driving operation on the vehicle on the basis of the output of the driving operation sensor 37. For example, the driving operation recognition section 112 generates data on the driving operation on the vehicle from the output of the driving operation sensor 37 by using a learning model that is generated by deep learning.

### <Vehicle Behavior Estimation Section>

The vehicle behavior estimation section 113 estimates behavior (for example, the speed, the acceleration, the yaw rate, and the like) of the vehicle on the basis of the output of the vehicle state sensor 34. For example, the vehicle behavior estimation section 113 generates data on the behavior of the vehicle from the output of the vehicle state sensor 34 by using a learning model that is generated by deep learning.

For example, the learning model that is used by the vehicle behavior estimation section 113 is a vehicle six-axis model. In the vehicle six-axis model, the acceleration in three axial directions of "front/rear", "right/left", and "up/down" and angular velocities in three axial directions of "pitch" , "roll" , and "yaw" of the traveling vehicle are modeled. That is, the vehicle six-axis model is a numerical model that replicates the behavior of the vehicle by using a total of six axes including pitching (a Y-axis) and rolling (an X-axis) motion and movement in a Z-axis (vertical motion of a vehicle body) of the vehicle body placed on four wheels via suspensions instead of capturing motion of the vehicle only on a traditional vehicle dynamics plane (only front/rear and right/left (X-Y movement) and yaw motion (the Z-axis) of the vehicle).

<Occupant State Estimation Section>

The occupant state estimation section 114 estimates the state of the driver (for example, a health condition, a feeling, a posture, and the like of the driver) on the basis of output of the occupant state sensor 35. For example, the occupant state estimation section 114 generates data on behavior of the driver from the output of the occupant state sensor 35 by using a learning model that is generated by deep learning. In this example, the occupant state estimation section 114 detects the abnormal physical condition of the driver.

### <Travel Control Section>

The travel control section 115 controls the actuator 40 on the basis of the output of the external environment recognition section 111, output of the driving operation recognition section 112, output of the vehicle behavior estimation section 113, and output of the occupant state estimation section 114. In this example, the travel control section 115 includes a route generation section 116, a route determination section 117, a vehicle motion determination section 118, an actuator control section 119, and a rule-based control section 120.

### <<Route Generation Section>>

The route generation section 116 generates one or plural candidate routes, on each of which the vehicle travels to the target position as a travel target of the vehicle, on the basis of the output of the external environment recognition section 111. The candidate route is a route on which the vehicle can travel, and is a candidate for the target route. For example, the candidate route includes a travel route that avoids the on-road obstacle recognized by the external environment recognition section 111.

For example, the route generation section 116 generates the candidate route by using a state lattice method. Although not illustrated specifically, the route generation section 116 sets a grid area including a large number of grid points on the travel road recognized by the external environment recognition section 111, and sequentially connects the plural grid points in the advancing direction of the vehicle, so as to set a large number of the travel routes. In addition, the route generation section 116 adds route cost for each of the plural travel routes. For example, as safety of the vehicle on the travel route is increased, the route cost that is added to such a travel route is reduced. Then, based on the route cost that is added to each of the plural travel routes, the route generation section 116 selects, as the candidate route, one or plural travel routes from the plural travel routes.

Here, the target positions include: a final target position indicative of a final arrival destination of the vehicle; and an intermediate target position that is appropriately set between the final target position and the current vehicle position in a process of traveling of the vehicle to the final target position. For example, the intermediate target position is the target position indicative of the arrival destination of the vehicle at a final end of the grid area, and is appropriately updated in the process of the travel.

In the evacuation travel control during an emergency such as a case where the abnormal physical condition of the driver is detected, the route generation section 116 searches for the stop position at which the vehicle is stopped emergently, sets the target position, and generates the evacuation route to the stop position. A specific example of the method for generating the evacuation route will be described below.

### <<Route Determination Section>>

The route determination section 117 selects the candidate route that serves as the target route from the one or plural candidate routes generated by the route generation section 116, the rule-based control section 120, and the emergency stop control section 130 on the basis of at least one of the output of the external environment recognition section 111, the output of the driving operation recognition section 112 and the output of the occupant state estimation section 114 . For example, the route determination section 117 selects the candidate route that the driver feels as the most comfortable of the plural candidate routes when the driver is in a normal state (a normal travel state).

For example, in the travel control in the normal travel state (the normal travel control), the route determination section 117 preferentially selects, as the target route, the candidate route generated by the route generation section 116 over the candidate route generated by the rule-based control section 120. Alternatively, in the normal travel control, in the case where the candidate route generated by the route generation section 116 significantly deviates from the candidate route generated by the rule-based control section 120, the route determination section 117 may select, as the target route, the candidate route generated by the rule-based control section 120. For example, in the case where the travel route generated by the route generation section 116 does not run through a free space that is searched by the rule-based control section 120, the route determination section 117 may determine that the candidate route generated by the route generation section 116 significantly deviates from the candidate route generated by the rule-based control section 120. Here, the free space is an area in the travel road and the road shoulder area included in the external environment, and is an area where the obstacle does not exist. Examples of the obstacle are a mobile obstacle and a stationary obstacle. Examples of the mobile obstacle are another vehicle and the pedestrian. Examples of the stationary obstacle are the median strip and the center pole. In the following description, the free space of the travel road may be referred to as a "travel road free space".

In the evacuation travel control during the emergency such as the case where the abnormal physical condition of the driver is detected, the route determination section 117 selects, as the target route, the evacuation route that is generated by the route generation section 116.

### <<Vehicle Motion Determination Section>>

The vehicle motion determination section 118 determines target motion on the basis of the candidate route that is selected as the target route by the route determination section 117. This target motion is motion of the vehicle that is required for the vehicle to follow the target route. In this example, the vehicle motion determination section 118 derives target drive power, a target braking force, and a target steering amount that are drive power, a braking force, and a steering amount required to generate the target motion, respectively. For example, the vehicle motion determination section 118 calculates the motion of the vehicle on the target route on the basis of the vehicle six-axis model and determines the target motion on the basis of the calculation result.

### <<Actuator Control Section>>

The actuator control section 119 controls the actuator 40 on the basis of the target motion that is determined by the vehicle motion determination section 118. In this example, the actuator control section 119 has a PT control section 119a, a brake control section 119b, and a steering control section 119c. The PT control section 119a transmits a drive command value indicative of the target drive power to the actuator for the drive system. The brake control section 119b transmits a brake command value indicative of the target braking force to the actuator for the brake system. The steering control section 119c transmits a steering command value indicative of the target steering amount to the actuator for the steering system.

### <Rule-Based Control Section>

The rule-based control section 120 uses an algorithm, which is based on a predetermined rule, for processing instead of a learning model generated by deep learning.

More specifically, the rule-based control section 120 recognizes the exterior environment on the basis of the output of the information acquisition section 30, and searches the travel road free space on the basis of the exterior environment. For example, the rule-based control section 120 searches for the travel road free space on the basis of a search rule that is set in advance. The search rule may include such a rule that a specified range with the object being a center (for example, a range of several meters) is set as unavoidable range. In addition, the rule-based control section 120 may be configured to search for the travel road free space in consideration of a moving speed of the mobile object in the case where the object is the mobile object.

Then, the rule-based control section 120 generates the candidate route that runs through the travel road free space (that is, the candidate route that avoids the obstacle) . The candidate route that is generated by the rule-based control section 120 (that is, the candidate route that runs through the free space) is used by the route determination section 117 in the travel control section 115.

### <Emergency Stop Control Section>

In the emergency (for example, when the occupant state estimation section 114 detects the abnormality of the driver), the emergency stop control section 130 executes control for causing the vehicle to make automated travel to the emergency stop position without relying on the driver's operation and thereby stopping the vehicle at the stop position emergently. More specifically, the emergency stop control section 130 includes a stop position determination section 131, a stop route generation section 132, and a risk calculation section 133.

In the case where the abnormality of the driver is detected, the emergency stop control section 130 is automatically actuated regardless of whether a driving mode so far is a manual driving mode, an assisted driving mode, or an automated driving mode.

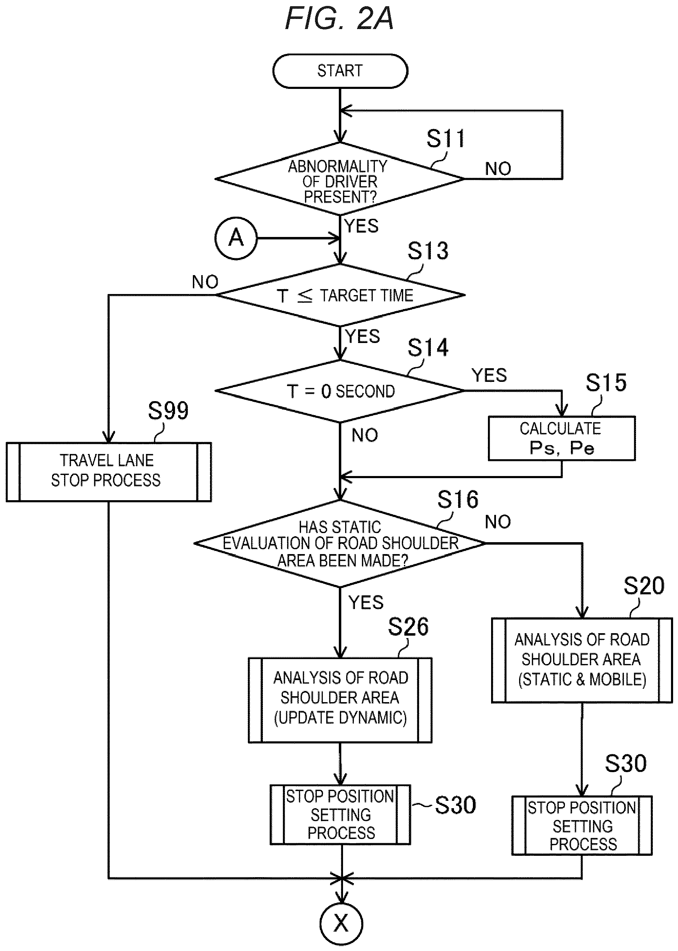

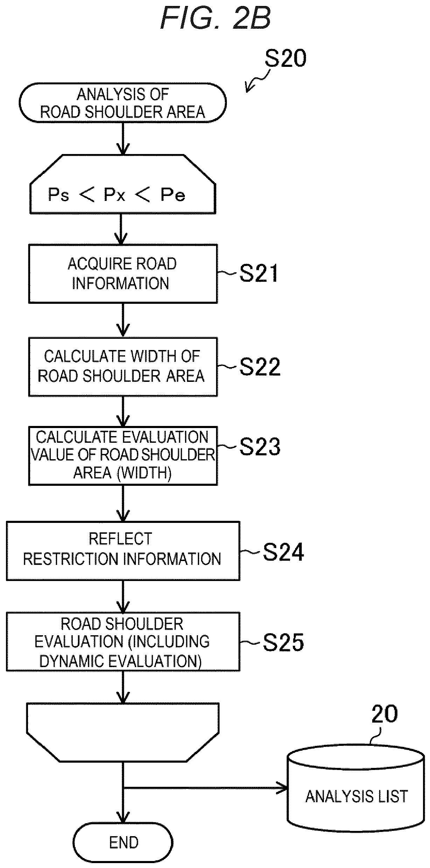

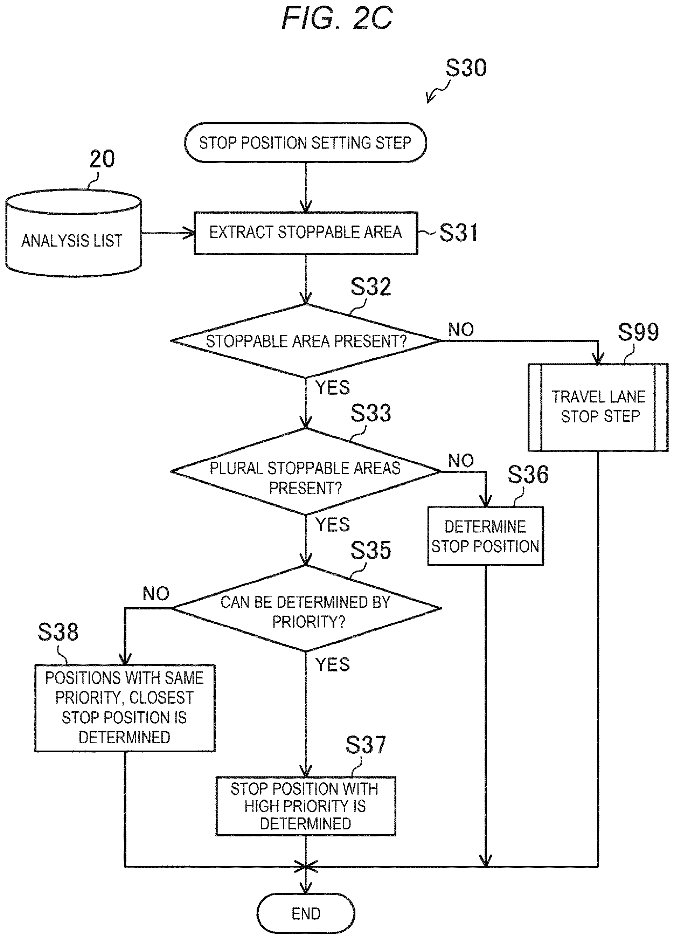

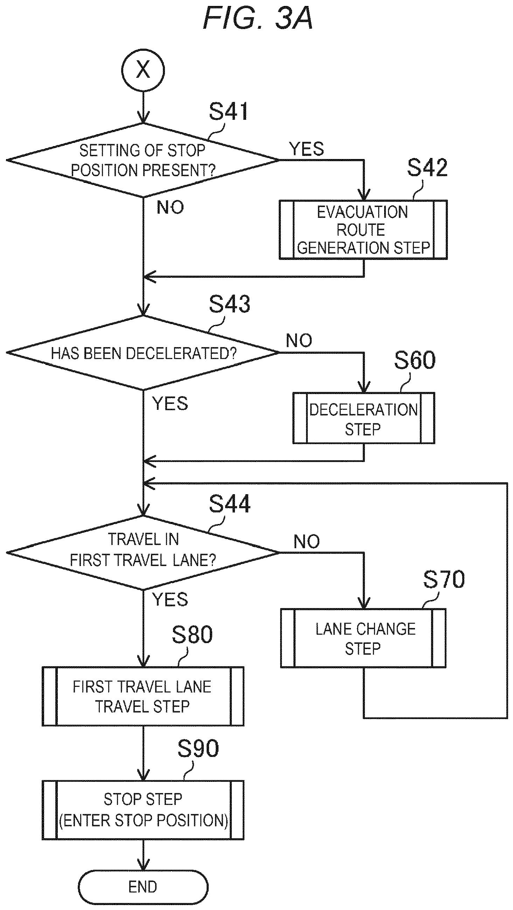

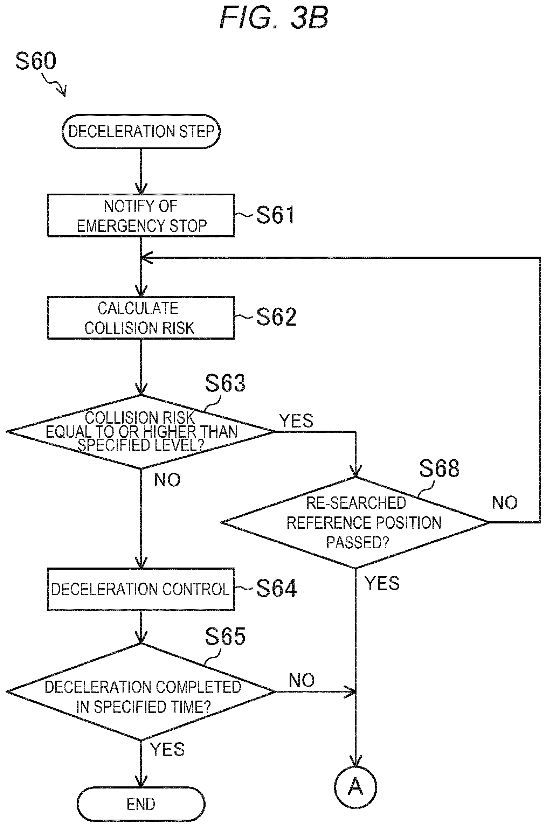

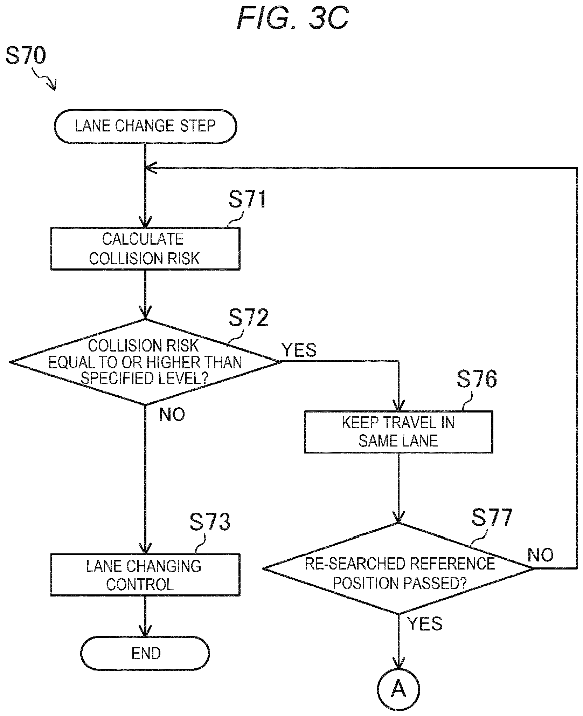

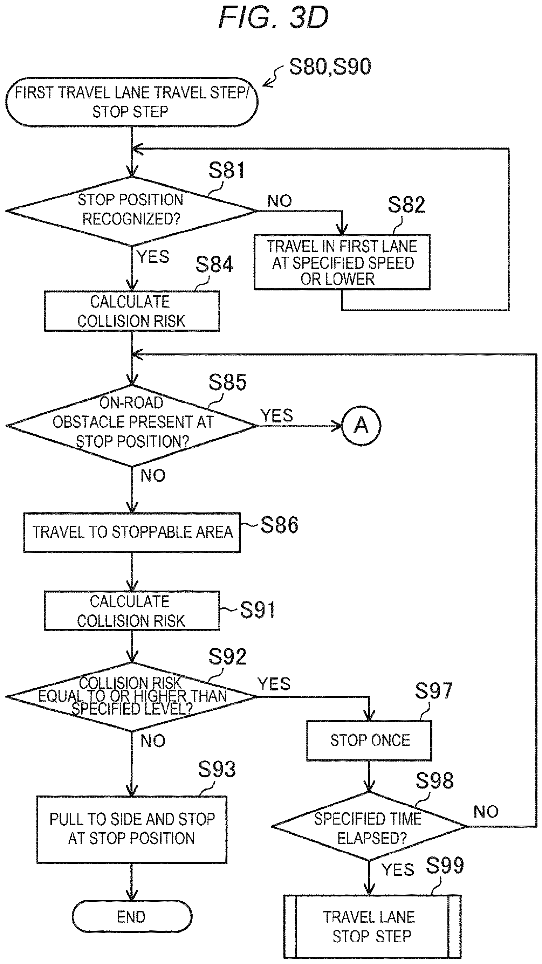

Fig. 2A to Fig. 2C and Fig. 3A to Fig. 3D are flowcharts illustrating an example of processing by the emergency stop control section 130. A description will be made on a function of each component of the emergency stop control section 130 with reference to these drawings. For convenience of the description, Fig. 2A to Fig. 2C may collectively be referred to as Figs. 2, and Fig. 3A to Fig. 3D may collectively be referred to as Figs. 3.

### <<Stop Position Determination Section>>

When the occupant state estimation section 114 detects the abnormality of the driver, the stop position determination section 131 analyzes the road shoulder area and sets the emergency stop position on the basis of an analysis result of the road shoulder area. The emergency stop position is an example of the above-described final target position.

Emergency stop control in Figs. 2 is executed when the abnormality of the driver is detected. That is, until the abnormality of the driver is detected, , the processing stands by in step S11 in Fig. 2A.

In Fig. 2A, when the abnormality of the driver is detected, it is determined YES in step S11.

In next step S13, it is checked whether a specified target time has elapsed since initiation of the evacuation travel control. A fixed time that is set in advance may be applied as the specified target time, or duration of the time may be changed according to a type of the abnormality of the driver. For example, when the abnormal physical condition of the driver occurs, depending on a type of the abnormal physical condition such as loss of consciousness by an episode of epilepsy, for example, there is a case where the vehicle should be stopped as fast as possible so as for a person therearound or a rescuer having expert knowledge such as an ambulance crew to check the condition. Accordingly, in the case where such abnormality of the driver is detected, as the specified target time, a shorter target time may be set in comparison with a time in another abnormal state in the relatively low emergency such as drowsy driving, for example.

In steps S13 and S14, T represents an elapsed time from the detection of the driver abnormality. A time point at which the abnormality of the driver is detected is set as T = 0. In this way, in first operation after the driver abnormality is detected, it is determined YES in steps S13, S14, and the control flow proceeds to next step S15.

In step S15, the stop position determination section 131 sets a detection candidate area for detecting an evacuation space. More specifically, the stop position determination section 131 sets a start point Ps and an end point Pe of the detection candidate area for detecting the evacuation space.

The setting method of the start point Ps is not particularly limited. For example, the stop position determination section 131 sets, as the start point Ps, a point at which a speed of the host vehicle H can be reduced to a specified speed or lower. More specifically, the start point Ps is set at an arrival point in the case where the speed of the host vehicle H is reduced to the specified speed (for example, 10 km/h) or lower after the abnormal physical condition of the driver is detected and the host vehicle H thereafter travels for a specified time (for example, three seconds) at such a speed, for example.

Fig. 4 illustrates a setting example of the start point Ps and the end point Pe. More specifically, Fig. 4 illustrates an example in which the start point Ps is set at a position H3 in the case where the abnormality of the driver is detected at a position H1 of the host vehicle H by a solid line, where deceleration is started at a position H2, and where the deceleration of the vehicle to the above specified speed and the travel thereof for the specified time are predicted at the position H3. In this embodiment, in order to simplify the description on a lapse of time, reference numerals 1, 2, 3, ... indicative of an order of the lapse of time will be added to the reference numeral H of the host vehicle, and the positions H1, H2, H3... will be described. That is, the positions H1, H2, H3 ... represent how the position of the host vehicle H is shifted over time. The same applies to the other vehicle J. Similarly, in regard to the other drawings, there is a case where a shifted state of the vehicle position over time is illustrated by adding a reference numeral to the reference sign H and J of the vehicle.

The setting method of the end point Pe is not particularly limited. For example, the end point Pe is set at a point that the vehicle reaches when traveling from the start point Ps at the specified speed (for example, 10 km/h) for the specified time. The method for setting the specified time is not particularly limited, and is set according to a travel scene, for example. More specifically, the end point Pe is set at a point that the host vehicle H reaches after traveling from the start point Ps on an open road for 60 seconds or a point that the host vehicle H reaches after traveling from the start point Ps for 180 seconds on a controlled-access highway. In addition, the end point Pe may have a margin with respect to an actual limit time.

When the end point Pe of the detection candidate area is defined just as described, it is possible to ensure to which position the host vehicle H is stopped. As a result, it is possible to avoid a situation where it takes longer for automated stopping than expected or where the host vehicle H cannot be stopped in a timely manner. Here, the method for determining the end point Pe by the stop position determination section 131 is not particularly limited. For example, a distance to the end point Pe (travel duration) may be a fixed time, and a value thereof may be changed according to a state, a degree of severity, a degree of the emergency, and the like of the abnormal physical condition of the driver.

After the stop position determination section 131 finishes setting the start point Ps and the end point Pe in step S15, in the next step S16, it is determined whether a static evaluation of the road shoulder area, which will be described below, is terminated. Here, since the emergency stop position has not been set, the determination of NO is made, and the control flow proceeds to the analysis of the road shoulder area (step S20) .

### - Analysis of Road Shoulder Area -

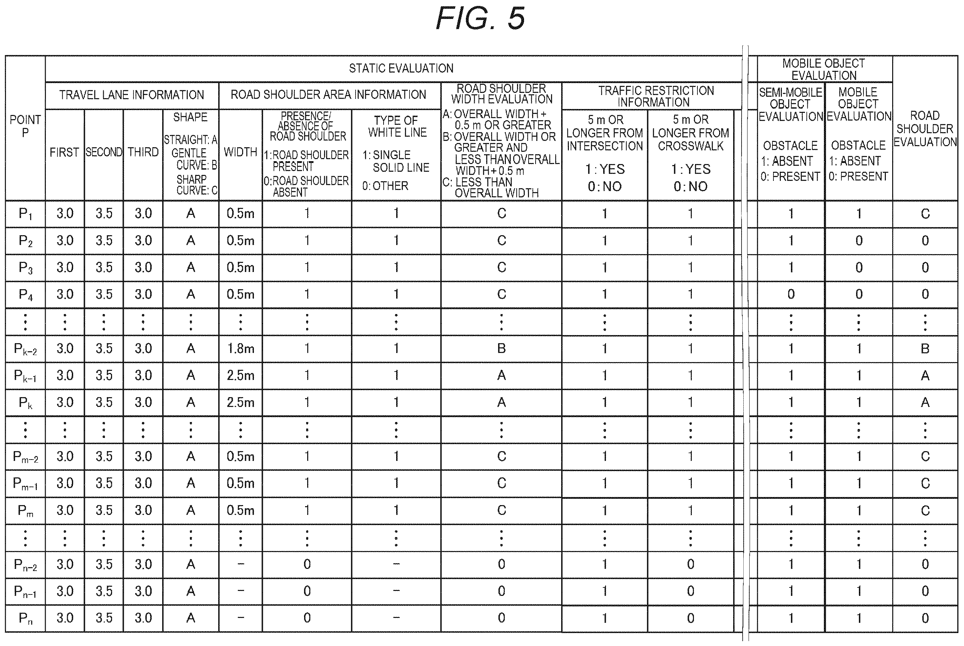

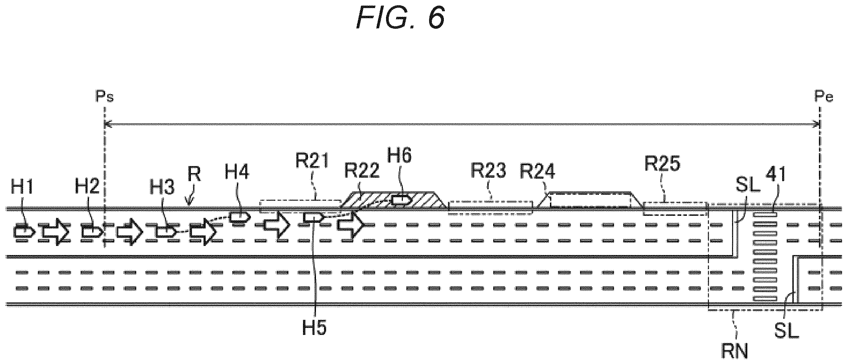

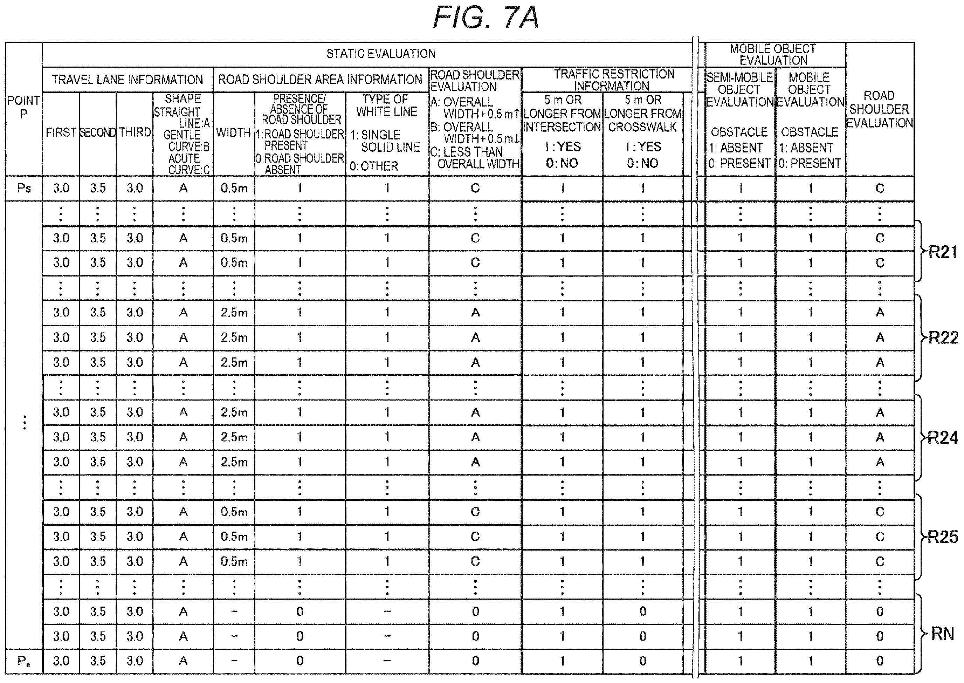

Fig. 2B is a flowchart illustrating an example of analysis step S20 of the road shoulder area. In this embodiment, as an analysis result of the road shoulder area that is based on the flow in Fig. 2B, a description will be made on an example in which an analysis list L1 in Fig. 5 is created on the basis of a travel scene in Fig. 4 and an example in which an analysis list L2 in Fig. 7A is created on the basis of a travel scene in Fig. 6.

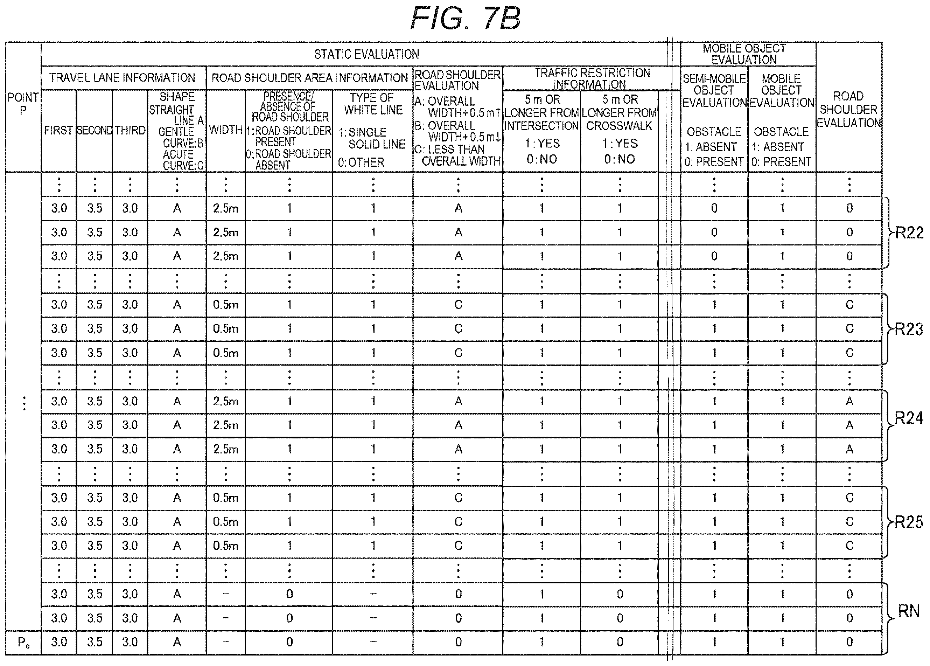

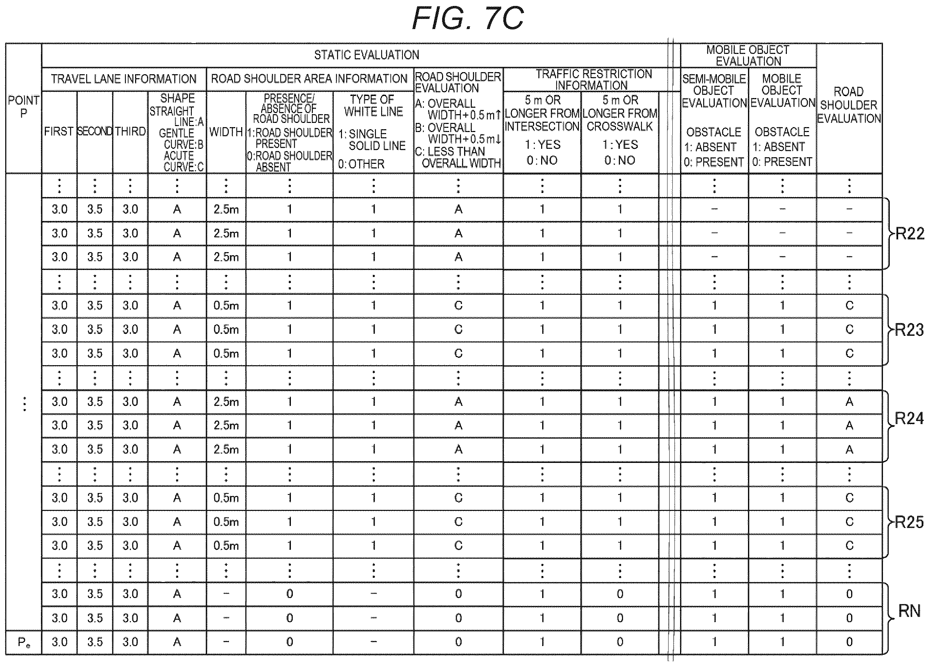

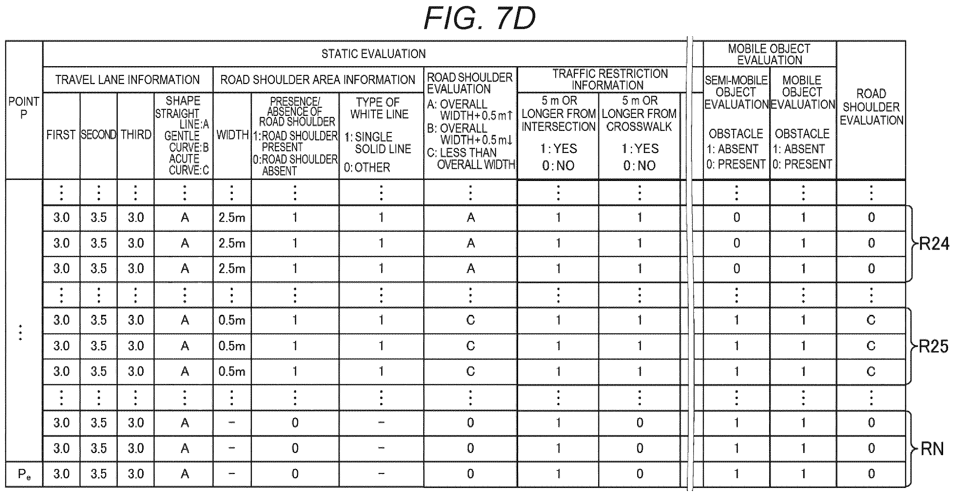

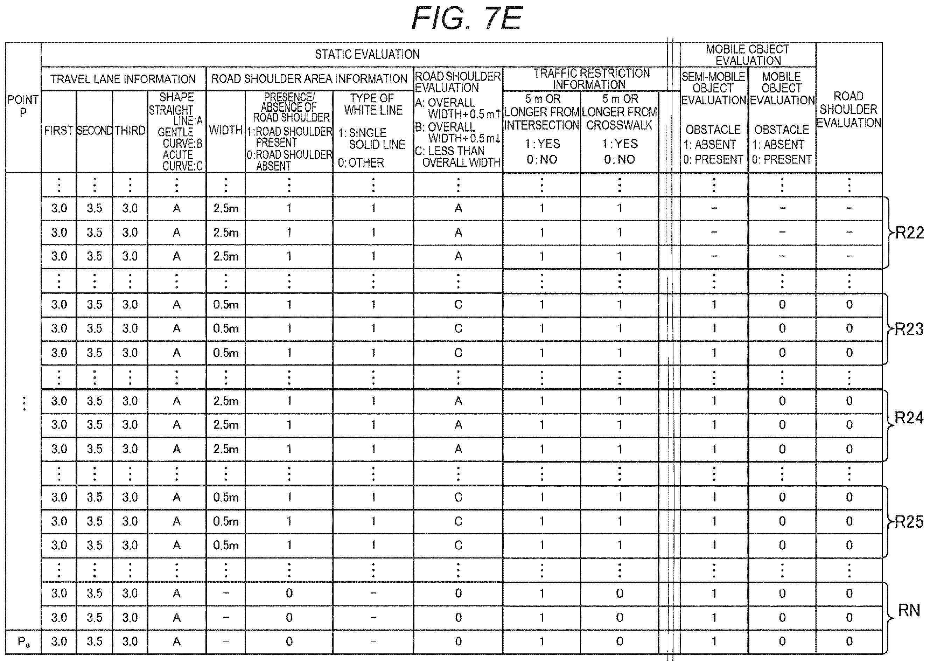

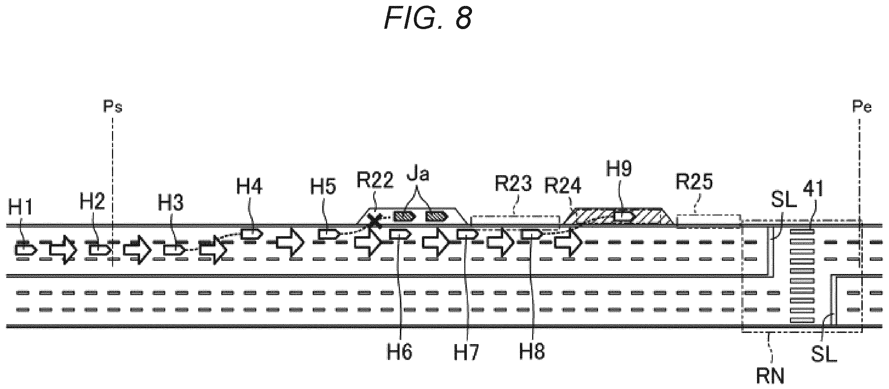

In Fig. 6, while the road shoulder area, a width of which has an evaluation value of C and which will be described below, is not illustrated, similar to Fig. 4, it is assumed that a road shoulder area R (an evaluation value of the width is A to C) stretched along a first travel lane is provided on the host vehicle H side of a stop line SL. The same applies to Fig. 8, Fig. 10A, Fig. 11, and Fig. 12, which will be described below. In the following description, in the case where the analysis list L1 in Fig. 5 and the analysis list L2 in Fig. 7 are not distinguished from each other, the analysis list L1 and the analysis list L2 will simply be described as analysis lists L.

In step S21, the stop position determination section 131 acquires road information of the detection candidate area (an area between a point Ps to a point Pe) . The road information includes information on the travel road, information used to calculate the width of the road shoulder area, and information, such as traffic regulation information and road structure information, serving as traffic restriction when the vehicle travels or is stopped (hereinafter referred to as traffic restriction information). For example, the road information is acquired from an external network or the GPS via the external communication section 36.

In step S22, the width of the road shoulder area is calculated. Although the specific calculation method is not particularly limited, for example, the stop position determination section 131 calculates the width of the road shoulder area R on the basis of the high-precision map information that is received via the external communication section 36 and the external environment information acquired by the information acquisition section 30 . More specifically, for example, as illustrated in Fig. 4, the stop position determination section 131 plots the number n (n is an integer equal to or larger than two) of points P₁ to Pₙ at specified intervals between the start point Ps and the end point Pe at a center of the first travel lane in the high-precision map information, calculates a distance by drawing a normal from each of the points P₁ to Pₙ to the road end, and subtracts the 1/2 width of the travel lane from a length of each of the normals to set the width of the road shoulder area. In the case where the high-precision map information includes information on the width of the road shoulder area, step S22 may be skipped, and such information may be used. In other words, the width of the road shoulder area is a width from a curbstone to a white line on the road shoulder side of the first travel lane, for example.

In step S22, information on presence or absence of the road shoulder area and information on a type of the white line between the road shoulder area and the travel road are acquired and reflected to the analysis list L. In an example illustrated in Fig. 5, "1" is set to each point Pₓ (Ps < Pₓ < Pe) when the road shoulder area is present, and "0" is set to each of the points Pₓ when the road shoulder area is absent. In addition, in the case where the single white line is provided, that is, in the case where the road shoulder area where the vehicle can be parked or stopped is present, "1" is set. In the case where the type of the white line is other than the above, "0" is set. Furthermore, "-" is set to a place where the white line for defining the road shoulder area does not exist. The same applies to Fig. 7A.

In step S23, the width of the road shoulder area is evaluated (hereinafter also referred to as a road shoulder width evaluation) . In examples illustrated in Fig. 5 and Fig. 7A, each of the points Pₓ is evaluated at three stages (A, B, C) according to the width of the road shoulder area. An evaluation A is that the width of the road shoulder area is the "overall width of the vehicle + 0.5 m or greater", an evaluation B is that the width of the road shoulder area is the "overall width of the vehicle + less than 0.5 m", and an evaluation C is that the width of the road shoulder area is "less than the overall width of the vehicle". For example, vehicle information on the host vehicle is applied to the width of the vehicle. In addition, the presence or the absence of the road shoulder area and the type of the white line may be taken into consideration for the evaluation of the road shoulder area. For example, as indicated in the columns for the points Pₙ₋₂ to Pₙ in Fig. 5, in the case where "0" is set for the presence or the absence of the road shoulder area, or in the case where "0" is set for the type of the white line, such an evaluation value (for example, "0") indicating that such a point is inappropriate as the stop position of the vehicle may be set as the evaluation of the road shoulder area.

In step S24, the traffic restriction information such as the traffic regulation information and the road structure information are reflected to the analysis list L. For example, the traffic regulation information includes a distance from an intersection, a distance from a crosswalk/a bicycle crossing lane, a distance from a diverging road/a merging road, a distance from a level crossing, a distance from a bus stop, presence or absence of a road sign/a road surface marking indicating prohibition of parking and stopping, a distance from a safety zone, and the like. For example, the road structure information includes a magnitude of a gradient of the road, inside/outside of a tunnel, inside/outside of a railway track bed, and the like.

More specifically, for example, in step S24, whether the emergency stop position (an emergency stop space) can be set is reflected to the analysis list L. For example, in the analysis list L, "1" is set to each of the points Pₓ when the emergency stop position can be set, and "0" is set when the emergency stop position cannot be set. In the example illustrated in Fig. 5, in the case where the distance from the intersection is 5 m or longer, "1" is set as the position where the emergency stop position can be set. In the case where the distance from the intersection is shorter than 5 m, "0" is set as the position where the emergency stop position cannot be set. Similar settings will be made in regard to the distance from the crosswalk.

In step S25, the road shoulder is evaluated during the execution of this control process. Although the method for the road shoulder evaluation is not particularly limited, for example, as the road shoulder evaluation, the evaluation is made by combining a static evaluation that is based on the above-described road information and a dynamic evaluation. In other words, the information in items for the static evaluation in the analysis list L is an example of the road information.

The dynamic evaluation is an evaluation that is based on the external environment information acquired from the information acquisition section 30 at a time point at which the abnormality of the driver is detected, for example. The dynamic evaluation includes: an evaluation of a semi-mobile obstacle (hereinafter referred to as a semi-mobile object evaluation) and an evaluation of the mobile obstacle (hereinafter referred to as a mobile object evaluation).

In the semi-mobile object evaluation, the on-road obstacle such as a parked vehicle in an engine-off state, operation of which is stopped, the on-road obstacle such as a fence or a signboard for construction that is temporarily installed, and the on-road obstacle such as a utility pole are evaluated. In other words, the semi-mobile obstacle as a target of the semi-mobile obstacle evaluation is the on-road obstacle that is not reflected to the road information, and includes a stationary object at the time point of being acquired from the information acquisition section 30 or at times before and after such a time point. In the semi-mobile object evaluation, at a position between the travel route of the host vehicle H and the road shoulder area, "1" is set in the case where the on-road obstacle is absent on the above-described normal, and "0" is set in the case where the on-road obstacle is present. For example, in the case where the utility pole exists at a position C in Fig. 4 and the other on-road obstacle is absent, "0" is set to the point P₄ in the analysis list L1 illustrated in Fig. 5. In the case where the evacuation route toward the stop position is not set and the host vehicle H travels straight on the current travel road, the on-road obstacle on the above-described normal is evaluated at the position between the travel route and the road shoulder area, for example.

In the mobile object evaluation, like the pedestrian, a traveling vehicle, or a vehicle that is temporarily stopped at a signal or the like on the travel road, the "moving on-road obstacle or the on-road obstacle with a possibility of moving in the near future (hereinafter collectively referred to as the mobile obstacle)" is evaluated. In the mobile object evaluation, at the position between the travel route of the host vehicle H (similar to the case of the semi-mobile object evaluation) and the road shoulder area, "1" is set in the case where the on-road obstacle is absent on the above-described normal, and "0" is set in the case where the on-road obstacle is present. In the mobile object evaluation, the on-road obstacle possibly moves forward or rearward. Thus, in addition to the point P at which the on-road obstacle is present, "0" is also set for the several points P behind and ahead of such a point P. The number of the points P which are located behind and ahead of such a point P and for which "0" is set is not particularly limited. For example, the fixed number may be applied, or such number may be set according to a type of the on-road obstacle or on the basis of a moving speed of the on-road obstacle that is estimated on the basis of the external environment information from the information acquisition section 30.

In the road shoulder evaluation, for example, the evaluation value is calculated on the basis of all results of the static evaluation and the dynamic evaluation. For example, in the case where at least one "0" is set for the item, to which "1" or "0" is set, the evaluation value of the point P is "0". For example, in the examples illustrated in Fig. 4 and Fig. 5, at the point P₁, the evaluation value of the road shoulder width evaluation is "C", and the other evaluation items are all "1". Thus, "C" is set as the evaluation value of the road shoulder evaluation. Meanwhile, in regard to each of the points P₂ to P₄, although the evaluation value of the road shoulder width evaluation is "C", the evaluation value of the mobile object evaluation is "0". Thus, "0" is set as the evaluation value of the road shoulder evaluation. Just as described, the road shoulder evaluation is made for all of the points Px, and "A to C" or "0" of the road shoulder width evaluation value is set as the evaluation value. Once the road shoulder evaluations for all of the points Pₓ, are made, the analysis list L is stored in the storage section 20, the processing in Fig. 2B is terminated, and the control flow proceeds to step S30 (processing in Fig. 2C) in Fig. 2A.

The static evaluation in the analysis list L is made only when the start point Ps and the end point Pe are set for the first time. Meanwhile, the dynamic evaluation is updated as needed or per specified period in a process of the travel of the vehicle. The dynamic evaluation is updated in step S19 of Fig. 2A, which will be described below, for example.

### - Stop Position Setting Step -

In Fig. 2C, based on the analysis list L that is generated in road shoulder area analysis step S20, as a stop position setting step, the emergency stop position is searched and set.

In step S31, the above-described analysis list L is read from the storage section 20, and an area where the vehicle can be stopped emergently (hereinafter referred to as a stoppable area) is extracted by using the analysis list L. More specifically, for example, of the road shoulder areas having the evaluation values A to C in the analysis list L, the road shoulder area, the width of which is equal to or greater than a specified width, and in which an area in the specified width or greater continues for a specified distance is set as the stoppable area. For example, the road shoulder area, the evaluation value of which is A or B, may be set to have the above specified width or greater, or all of road shoulder areas, the evaluation value of each of which is A, B, or C, may be set to have the above specified width or greater.

In the examples illustrated in Fig. 4 and Fig. 5, it is assumed that each of the areas having the evaluation value A or B is set as the stoppable area. In this case, as illustrated in Fig. 4, the stoppable area R11 is extracted in step S31. In the examples illustrated in Fig. 6 and Fig. 7A, it is assumed that all the areas having the evaluation values A to C are included as the stoppable areas. In this case, as illustrated in Fig. 6, stoppable areas R21 to R25 are extracted in step S31. In Fig. 4 and Fig. 6, RN denotes a restriction area with the traffic restriction.

In step S32, it is determined whether the stoppable area is present between the current position of the host vehicle H (in the case where the current position is behind the start point Ps, the start point Ps) and the end point Pe. In the example illustrated in Fig. 4, the stoppable area R11 is extracted. Thus, it is determined YES in step S32, and the control flow proceeds to next step S33. Also in the example illustrated in Fig. 6, the stoppable areas R21 to R25 are extracted. Thus, similar to Fig. 4, the control flow proceeds to next step S33.

In step S33, it is determined whether the plural stoppable areas are present. As in the example illustrated in Fig. 4, in the case where the only one stoppable area is present, the emergency stop position is set in the stoppable area R11 (step S36), and the emergency stop position setting processing is terminated. On the other hand, as in the example illustrated in Fig. 6, in the case where the plural stoppable areas are present, the control flow proceeds to next step S35.

In step S35, it is determined whether the emergency stop position can be set on the basis of a priority. In the example illustrated in Fig. 6, the evaluation value of the width of the road shoulder area is set to A, B, or C in a descending order. Thus, the priority is high in an order of the evaluation values A, B, C. In this case, in the example illustrated in Fig. 6, as illustrated in Fig. 7A, two stoppable areas R22, R24 each have the evaluation value A. Thus, the determination is NO in step S35, and the control flow proceeds to step S38. In step S38, of the areas having the same priority (the evaluation value A), the emergency stop position is set in the stoppable area R22 where the vehicle can be stopped at an execution time point of this control process and that is the closest area. Once the setting of the emergency stop position is terminated, the setting processing in Fig. 2C, that is, the processing in step S30 in Fig. 2A is terminated.

On the other hand, if it is determined YES in step S35, that is, in the case where the emergency stop position can be set on the basis of the priority, the emergency stop position is set in the area with the highest priority of the stoppable areas where the vehicle can be stopped.

In the case where the stoppable area is sufficiently longer than a length of the host vehicle H, it is not particularly limited where the emergency stop position is set in the stoppable area. For example, in the stoppable area, a position on a front side is set as the emergency stop position. Once the setting of the emergency stop position is terminated, the setting processing in Fig. 2C, that is, the processing in step S30 in Fig. 2A is terminated.

In the following description, for convenience of the description, the above step of setting the emergency stop position by the stop position determination section 131 will be referred to as the "stop position setting step".

### <<Stop Route Generation Section>>

The stop route generation section 132 generates an evacuation route to the emergency stop position that is set by the stop position determination section 131. More specifically, the stop route generation section 132 executes similar processing to the route generation processing by the route generation section 116. More specifically, the stop route generation section 132 generates plural candidate routes on the basis of the output of the external environment recognition section 111. In addition, based on the route cost that is applied to each of the plural travel routes, the stop route generation section 132 selects, as the evacuation route to the emergency stop position (hereinafter simply referred to as the evacuation route), the safest and shortest travel route toward the emergency stop position of the plural travel routes. In order to further ensure the safety, the stop route generation section 132 may generate the evacuation route on the basis of the similar processing to processing executed by the rule-based control section 120. The stop route generation section 132 transmits the selected evacuation route to the vehicle motion determination section 118.

### <<Risk Calculation Section>>

Based on the external environment information acquired by the information acquisition section 30, the risk calculation section 133 calculates a collision risk of the host vehicle H with the on-road obstacle in an evacuation route generation step, a deceleration step, a lane change step, a first travel lane travel step, and a stop step, which will be described below.

The on-road obstacles considered by the risk calculation section 133 include both of the mobile objects (for example, the four-wheeled motor vehicle, the two-wheeled motor vehicle, the bicycle, the pedestrian, and the like) and the stationary objects (the installed object that is temporarily installed for the construction, the parked vehicle, and the like) . The collision risk that is calculated by the risk calculation section 133 is transmitted to the stop position determination section 131. Here, in the travel road toward the same direction, the travel lane that is adjacent to the road shoulder area R will be referred to as the first travel lane. In addition, in the case where there is a travel lane that is adjacent to the first travel lane and is separated from the road shoulder area R with respect to the first travel lane, such a travel lane will be referred to as a second travel lane. In addition, in the case where there is a travel lane that is adjacent to the second travel lane and is separated from the road shoulder area R with respect to the second travel lane, such a travel lane will be referred to as a third travel lane. That is, the travel road has travel lanes that are aligned in an order of the first travel lane, the second travel lane, and the third travel lane from the road shoulder area side. As the travel lane, the single travel lane of the first travel lane may be provided, or four or more of the travel lanes in the same direction may be provided.

As the collision risk, the risk calculation section 133 may calculate a collision risk value that is a product of a first risk value and a second risk value. The first risk value is set for the position serving as the candidate where the host vehicle H is stopped (hereinafter referred to as a candidate stop position). The second risk value is set in regard to behavior of the host vehicle H until the host vehicle H reaches the candidate stop position. A specific calculation method of the collision risk value will be described below.

### [Evacuation Travel Control]

Next, a description will be made on the evacuation travel control with reference to Figs. 2 and Figs. 3.

First, a description will be made on an overview of the evacuation travel control. In the evacuation travel control, in addition to the above-described stop position setting process, the evacuation route generation step, the deceleration step, the lane change step, the first travel lane travel step, and the stop step are executed. The evacuation route generation step is a step of generating the evacuation route to the emergency stop position that is set in the stop position setting step. The deceleration step is a step of decelerating the speed of the host vehicle H to be equal to or lower than the specified speed. The lane change step is a step of changing the lane of the vehicle to the first travel lane on the basis of the external environment information acquired by the information acquisition section 30 in the case where the plural travel lanes (in the same direction) are present and the host vehicle H travels on the lane other than the first travel lane. The first travel lane travel step is a step of causing the host vehicle H to travel at the specified speed or lower on the first travel lane. The stop step is a step of causing the vehicle to enter the stoppable area from the first travel lane and stopping the host vehicle H at the emergency stop position.

In the evacuation travel control, the flows in Fig. 2 and Fig. 3 are repeatedly executed until the host vehicle H is stopped at the emergency stop position. In <<Stop Position Determination Section>> above, the operation up to step S30 in Fig. 2A has been described. Thus, a description will herein be made on operation thereafter.

### <<Evacuation Travel Control (1)>>

The following description will be made on the assumption that the abnormality of the driver is detected when the host vehicle H travels in the travel scene illustrated in Fig. 6. That is, it is assumed that, at an initiation time point of the control flow in Fig. 3A, the start point Ps and the end point Pe have been set at positions illustrated in Fig. 6 and the analysis list L2 in Fig. 7A has been created. In addition, such a state is assumed that R21 to R25 (see Fig. 6) are extracted as the stoppable areas and the emergency stop position is set in the stoppable area R22.

In Fig. 2A, when the processing in step S30, that is, the stop position setting step by the stop position determination section 131 is terminated, the control flow proceeds to step S41 in Fig. 3A.

In step S41, the emergency stop control section 130 checks whether the setting of the stop position is present. The setting of the stop position includes a case where the emergency stop position is newly set and, although a detailed description will be made below, a case where the emergency stop position is changed during the travel toward the emergency stop position (resetting). Since the emergency stop position is set in step S30 of Fig. 2, it is determined YES in step S41, and the control flow proceeds to step S42.

### - Evacuation Route Generation Step -

In step S42, the evacuation route to the emergency stop position, which is set by the stop position determination section 131, is generated. More specifically, in the evacuation route generation step, the stop route generation section 132 generates the evacuation route to the emergency stop position, which is set by the stop position determination section 131. The description has been made on the generation of the evacuation route in above <<Stop Route Generation Section>>. Thus, the description thereon will not be made herein.

In next step S43, the emergency stop control section 130 checks whether the host vehicle H has been decelerated to the specified speed that is set in advance. As described above, the vehicle behavior estimation section 113 estimates the vehicle speed on the basis of the output of the vehicle state sensor 34 (for example, the vehicle speed sensor) . Thus, the emergency stop control section 130 checks whether the host vehicle H has been decelerated to the specified speed (for example, 10 km/h) on the basis of the vehicle speed information of the host vehicle H that is estimated by the vehicle behavior estimation section 113.

For example, if the host vehicle H has not been decelerated to the specified speed, it is determined NO in step S43, and the control flow proceeds to the "deceleration step" in step S60. In the example illustrated in Fig. 6, a case where the host vehicle H travels between H1 and H2 corresponds to such a case.

### - Deceleration Step -

Fig. 3B is a flowchart illustrating processing operation of the deceleration step.

In the deceleration step, first, in step S61, it is notified that the host vehicle H is stopped emergently by using a notification device D. The notification devices D include an optical notification device such as a hazard warning lamp that visually notifies of the emergency stop by using light and a sound notification device such as a horn or a speaker that notifies of the emergency stop by using sound or voice. More specifically, for example, the emergency stop control section 130 generates the sound by using the horn and causes the hazard warning lamp to blink so as to notify the other vehicle J and the like around the host vehicle H that the host vehicle H enters emergency stop operation (deceleration operation). In step S61, the emergency stop of the host vehicle H may be notified by using one of the optical notification device and the sound notification device.

In parallel with the processing in step S61, in step S62, the risk calculation section 133 calculates the collision risk during the execution of the deceleration step and in the following steps on the basis of the external environment information acquired by the information acquisition section 30. For example, the risk calculation section 133 grasps information on a position and a speed of the other vehicle J that travels behind or obliquely behind the host vehicle H on the basis of the output of the cameras 31 and the radars 32. Then, in the case where the host vehicle H is decelerated, the risk calculation section 133 calculates the risk that the other vehicle J collides with the host vehicle H.

In next step S63, the emergency stop control section 130 determines whether the collision risk calculated by the risk calculation section 133 is equal to or higher than a specified level. Although the evaluation method of the collision risk is not particularly limited, for example, (1) a position score corresponding to the position of the other vehicle J and a speed score corresponding to the speed thereof are set, and it is determined whether an integrated value thereof is equal to or higher than a specified collision score, or (2) the collision risk is determined when the emergency stop control section 130 performs a travel simulation by using an in-vehicle model or the like.

For example, as illustrated in Fig. 6, in the case where the other vehicle J does not travel around the host vehicle H, the collision risk becomes lower than the specified level (determined NO in step S62), and the emergency stop control section 130 initiates the deceleration control (step S64). Although the specific method of the deceleration control is not particularly limited, for example, the emergency stop control section 130 transmits a deceleration command signal that commands the vehicle motion determination section 118 to decelerate the host vehicle H to the specified speed. When receiving the deceleration command signal, the vehicle motion determination section 118 controls each of the actuators via the actuator control section 119 to decelerate the host vehicle H. Then, in the case where the deceleration processing is terminated in a specified time, it is determined YES in next step S65, and the emergency stop control section 130 terminates the deceleration step. In the example illustrated in Fig. 6, it is assumed that the deceleration step of the host vehicle H is terminated at the position H2 and that the speed of the host vehicle H becomes equal to or lower than the specified speed. When the deceleration step is terminated, the control flow proceeds to step S44 in Fig. 3A.

Although not illustrated, in step S63, also after the emergency stop control section 130 initiates the deceleration control, the risk calculation section 133 repeatedly calculates the risk. Then, if the collision risk in the specified level or higher is present, the deceleration control may temporarily be stopped by interruption processing, the control flow may return to step S63, and it may be determined YES to proceed (to step S68) . A description on control in step S68 will be made below.

Referring back to Fig. 3A, in step S44, the emergency stop control section 130 checks whether the host vehicle H travels on the first travel lane. The emergency stop control section 130 checks the travel lane of the host vehicle H on the basis of the vehicle position information detected by the position sensor 33 and the image data on the external environment captured by the cameras 31, for example. In the case where the host vehicle H travels at the position H2 in Fig. 6, it is determined NO in step S44, and the control flow proceeds to next step S45. In step S45, it is checked whether lane change operation is terminated. Thus, it is also determined NO in this step, and the control flow proceeds to the "lane change step" in next step S70.

### - Lane Change Step -

Fig. 3C is a flowchart illustrating processing operation of the lane change step (also referred to as a lane change) .

First, in step S71, the risk calculation section 133 calculates the collision risk during execution of the lane change step and in the following steps on the basis of the external environment information acquired by the information acquisition section 30. For example, the risk calculation section 133 grasps the information on the position and the speed of the on-road obstacle (for example, the other vehicle J) that is positioned ahead of, obliquely ahead on the road shoulder side of, obliquely behind on the road shoulder side, or behind the host vehicle H on the basis of the output of the cameras 31 and the radars 32. Then, in the case where the host vehicle H changes the lane to the travel lane on the road shoulder area side, the risk calculation section 133 calculates the risk of the collision with the other vehicle J.

In next step S72, the emergency stop control section 130 determines whether the collision risk calculated by the risk calculation section 133 is equal to or higher than the specified level. Although the evaluation method of the collision risk is not particularly limited, for example, the similar method to the method of the above-described "deceleration step" can be applied.

For example, as illustrated in Fig. 6, in the case where the other vehicle J does not travel around the host vehicle H, the collision risk becomes lower than the specified level (determined NO in step S72), and the emergency stop control section 130 initiates lane change control (step S73). Although the specific method of the lane change control is not particularly limited, for example, the emergency stop control section 130 transmits a lane change command signal that stops blinking of the hazard warning lamp, causes a direction indicator (not illustrated) on the road shoulder area side to blink, and commands the vehicle motion determination section 118 to change the lane to the travel lane on the road shoulder area side. When receiving the lane change command signal, the vehicle motion determination section 118 controls each of the actuators via the actuator control section 119 to change the lane of the host vehicle H. In the example illustrated in Fig. 6, it is assumed that the lane change step is terminated at the position H4 of the host vehicle H and the host vehicle H starts traveling on the first travel lane at the speed that is equal to or lower than the specified speed. When the lane change step is terminated, the control flow proceeds to step S80 in Fig. 3A.

### - First Travel Lane Travel Step, Stop Step -

Fig. 3D is a flowchart illustrating processing operation in the first travel lane travel step and the stop step.

In step S81 and step S82, until the stoppable area R22 is recognized by the cameras 31, for example, the emergency stop control section 130 causes the hazard warning lamp to blink and causes the host vehicle H to travel at the specified speed (for example, 10 km/h) or lower on the first travel lane.

Then, when the information acquisition section 30 (for example, the cameras 31 and the radars 32) recognizes the stoppable area R22 (the emergency stop position), it is determined YES in step S81, and the control flow proceeds to step S84.

In step S84, the risk calculation section 133 calculates the collision risk in the stoppable area R22 (the emergency stop position) that is recognized by the information acquisition section 30 (for example, the cameras 31 and the radars 32). For example, the risk calculation section 133 checks the presence or the absence of the on-road obstacle (for example, the stopped other vehicle J) in the stoppable area R22 (the emergency stop position) on the basis of the output of the cameras 31 and the radars 32, and thereby calculates the risk of the collision with the on-road obstacle.

In step S85, based on the output of the cameras 31 and the radars 32, the emergency stop control section 130 checks whether the stoppable area R22 is the free space, in other words, whether there is the risk of colliding with the on-road obstacle in the case where the host vehicle H enters the stoppable area R22. In the example illustrated in Fig. 6, it is assumed that, when the host vehicle H travels to the position H5, it is recognized that the stoppable area R22 is the free space. In such a case, it is determined NO in step S85, and, as the first travel lane travel step, the emergency stop control section 130 causes the host vehicle H to travel to a position right behind the stoppable area R22 (step S86). Although not illustrated, also in the first travel lane travel step, similar to the "deceleration step" and the "lane change step" described above, the first travel lane travel step may be executed, and the collision risk in the following stop step may be calculated on the basis of the external environment information acquired by the information acquisition section 30. Then, when determining that the collision risk is equal to or higher than the specified level, the emergency stop control section 130 may execute control according to such a situation where the host vehicle H is stopped at the current position.

In next step S91, the risk calculation section 133 calculates the collision risk in the first travel lane travel step and/or the stop step on the basis of the external environment information acquired by the information acquisition section 30. For example, the risk calculation section 133 grasps the information on the position and the speed of the on-road obstacle (for example, the bicycle, the pedestrian, or the like) that is positioned ahead of, obliquely ahead on the road shoulder side of, obliquely behind on the road shoulder side, or behind the host vehicle H on the basis of the output of the cameras 31 and the radars 32. Then, the risk calculation section 133 calculates the risk of the collision with the on-road obstacle when the host vehicle H travels on the first travel lane or enters the stoppable area R22.

In next step S92, the emergency stop control section 130 determines whether the collision risk calculated by the risk calculation section 133 is equal to or higher than the specified level. Although the evaluation method of the collision risk is not particularly limited, for example, the similar method to the method of the above-described "deceleration step" can be applied.

For example, as illustrated in Fig. 6, in the case where the on-road obstacle is absent around the host vehicle H, and the stoppable area R22 is the free space, the collision risk is equal to or lower than the specified level (NO in step S92), and the emergency stop control section 130 initiates the entry to the stoppable area R22 and stop control at the emergency stop position (step S93). Although the specific method of the stop control is not particularly limited, for example, the emergency stop control section 130 transmits a stop command signal that stops blinking of the hazard warning lamp, causes the direction indicator (not illustrated) on the road shoulder area side to blink, and commands the vehicle motion determination section 118 to cause the host vehicle H to enter the stoppable area R22 and stop the host vehicle H. When receiving the stop command signal, the vehicle motion determination section 118 controls each of the actuators via the actuator control section 119, causes the host vehicle H to enter the stoppable area R22, and stops the host vehicle H at the emergency stop position. When the host vehicle H is stopped at the emergency stop position, the evacuation travel control is terminated.

### <<Evacuation Travel Control (2)>>

The following description will be made on the assumption that the abnormality of the driver is detected when the host vehicle H travels in a travel scene illustrated in Fig. 8. That is, similar to the case of <<Evacuation Travel Control (1)>> described above, it is assumed that, at the initiation time point of the control flow in Fig. 3A, the start point Ps and the end point Pe have been set at positions illustrated in Fig. 8 and the analysis list L2 in Fig. 7A has been created. In addition, it is assumed that another vehicle Ja that stops at the stoppable area R22 is not recognized when the host vehicle H travels at the position H1 and that the other vehicle Ja is recognized for the first time when the host vehicle H reaches the position H5.

Here, a description will be centered on different points from <<Evacuation Travel Control (1)>> described above, and thus the common operation to that in <<Evacuation Travel Control (1) >> may not be described. For example, the operation until the host vehicle H reaches the position H5, that is, the operation immediately before step S80 in Fig. 3A is common to that in <<Evacuation Travel Control (1)>> described above. Thus, a description will herein be made on the operation after the host vehicle H travels to the position H5 and the control process in Fig. 3D is initiated.

### - First Travel Lane Travel Step, Stop Step -

In the example illustrated in Fig. 8, when the stoppable area R22 is recognized (YES in step S81), the other vehicle Ja is stopped in the stoppable area R22. Thus, it is determined YES in step S85. That is, when the host vehicle H enters the stoppable area R22, the emergency stop control section 130 determines that the collision risk with the other vehicle Ja is equal to or higher than the specified level. As a result, the emergency stop control section 130 cancels the first travel lane travel step halfway, and resets the stop position. More specifically, the emergency stop control section 130 cancels the control process in Fig. 3D, and the control flow returns to step S13 in Fig. 2A.

### - Stop Position Setting Step -

Here, it is assumed that the host vehicle H travels near the position H5 (see Fig. 8) and that the specified target time has not been elapsed. In such a case, in Fig. 2A, it is determined YES in step S13, and it is determined NO in step S14. In addition, since the static evaluation of the road shoulder area has already been made in the initial flow, it is determined YES in step S16, and the control flow proceeds to step S26.

In the case where the specified target time has elapsed at this time point, it is determined NO in step S13, and the control flow proceeds to a travel lane stop step in step S99.

### - Travel Lane Stop Step -

In step S99, the emergency stop control section 130 stops the host vehicle H as soon as possible in the travel lane. For example, at a time point at which the specified target time elapses, the rear traffic condition (the risk of the collision with the other vehicle J) is checked. Then, the host vehicle H is promptly decelerated and stopped at the current position. In addition, for example, in the case where the host vehicle H travels in a traffic restriction area where the stop of the vehicle is prohibited, the host vehicle H travels until the host vehicle H promptly leaves the traffic restriction area, and then the host vehicle H is stopped. In this way, it is possible to avoid such a situation where it takes longer than expected to stop the host vehicle H or it is difficult to promptly stop the host vehicle H. That is, it is possible to avoid extension of the time required to stop the vehicle emergently.

### - Stop Position Setting Step -

Returning to the stop position setting step, in step S26, the evaluation values (the items of the semi-mobile obstacle and the mobile obstacle) of the point Pₓ, which is located ahead of the current position of the host vehicle H, in relation to the dynamic evaluation in the analysis list L and the comprehensive evaluation value of the road shoulder area (the right-end column in Fig. 7A) are updated. Fig. 7B illustrates the updated analysis list L2. In Fig. 7B, "0" is set as the evaluation result of the semi-mobile obstacle for the area R22 . As a result, "0" is set as the evaluation value of the road shoulder evaluation in the area R22. Here, it is assumed that the evaluation values in the stoppable areas R23 to R25 and the restriction area RN are not changed.

Just as described, the static evaluation in the analysis list L is made only when the start point Ps and the end point Pe are set for the first time. When the step is canceled halfway, only the evaluation value related to the dynamic evaluation is updated. In this way, it is possible to significantly reduce a calculation time in the case where the step is canceled in the process of the travel.

When the update of the analysis list is terminated in step S26, in next step S30 (see Fig. 2C), the emergency stop position is searched and set. Since the processing of each of the control processes is the same as the processing that has been described so far, the following description will be centered on the processing results.

In step S31 of Fig. 2C, R23 to R25 are extracted as the stoppable areas. As described above, since "0" is set as the evaluation value of the road shoulder evaluation for the area R22, the area R22 is not extracted as the stoppable area.

It is determined YES in step S32 and step S33 since the stoppable areas R23 to R25 are extracted.

Here, as illustrated in Fig. 7B, in step S35, since the single area R24 corresponds to the stoppable area with the priority A, it is possible to set the emergency stop position on the basis of the priority. Thus, it is determined YES in step S35, and the next emergency stop position is set in the stoppable area R24. When the setting processing in Fig. 2C is terminated, the processing in step S30 of Fig. 2A is terminated, and the control flow proceeds to Fig. 3A.

Since the emergency stop position is set in step S30 of Fig. 2, it is determined YES in step S41 of Fig. 3A, and the control flow proceeds to the evacuation route generation step in step S42.

### - Evacuation Route Generation Step -

In step S42, the stop route generation section 132 generates the evacuation route to the emergency stop position, which is set in the stoppable area R24.

### - Deceleration Step -

Since the host vehicle H has already been decelerated to the specified speed or lower, it is determined YES in step S43. Here, the deceleration step is not executed, and the control flow proceeds to next step S44.

### - Lane Change Step -

Since the host vehicle H already travels in the first travel lane, it is determined YES in step S44. Here, the lane change step is not executed, and the control flow proceeds to next step S80.

### - First Travel Lane Travel Step, Stop Step -

In step S81 and step S82, until the stoppable area R24 is recognized by the cameras 31, for example, the emergency stop control section 130 causes the hazard warning lamp to blink and causes the host vehicle H to travel in the first travel lane at the specified speed (for example, 10 km/h) or lower.

Then, when the information acquisition section 30 (for example, the cameras 31 and the radars 32) recognizes the stoppable area R24 (the emergency stop position), it is determined YES in step S81, and the control flow proceeds to step S84.

It is assumed that the host vehicle H travels at a position H8 at this time point. In addition, in the example illustrated in Fig. 8, it is assumed that, when the host vehicle H travels to the position H8, it is recognized that the stoppable area R24 is the free space.

In such a case, it is determined NO in step S85, and, as the first travel lane travel step, the emergency stop control section 130 causes the host vehicle H to travel to a position right behind the stoppable area R24 (step S86).

Then, in step S91, the risk calculation section 133 calculates the collision risk. In step S92, the emergency stop control section 130 determines whether the collision risk is equal to or higher than the specified level. In the example illustrated in Fig. 8, since the stoppable area R24 is the free space, it is determined NO in step S92. In such a case, the emergency stop control section 130 initiates the entry of the host vehicle H to the stoppable area R24 and the stop control at the emergency stop position. Then, when the host vehicle H is stopped at the emergency stop position, the evacuation travel control is terminated.

### <<Evacuation Travel Control (3)>>

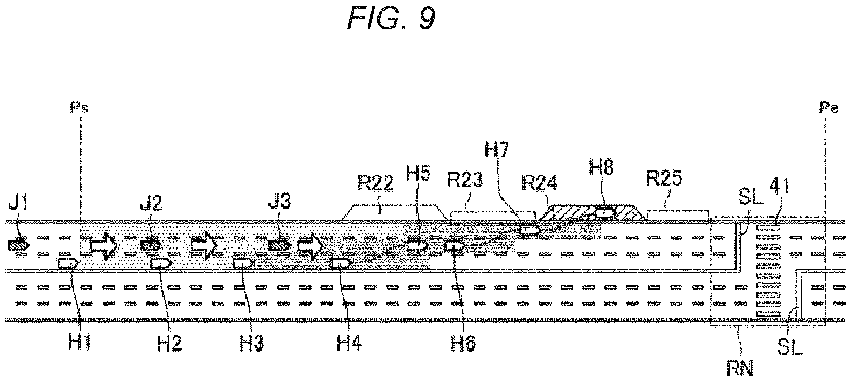

The following description will be made on the assumption that the abnormality of the driver is detected when the host vehicle H travels in a travel scene illustrated in Fig. 9. Similar to the case of <<Evacuation Travel Control (2)>> described above, it is assumed that, at the initiation time point of the control flow in Fig. 3A, the start point Ps and the end point Pe have been set at positions illustrated in Fig. 9 and the analysis list L2 in Fig. 7A has been created.

Here, a description will be centered on different points from <<Evacuation Travel Control (2)>> described above, and thus the common operation to that in <<Evacuation Travel Control (2) >> may not be described. In Fig. 9, the position H1 of the host vehicle H corresponds to the position H2 in Fig. 6. That is, the control is completed up to the deceleration step in step S60 of Fig. 3A. A description will be made on the operation from step S44 in Fig. 3A. As illustrated in Fig. 9, it is assumed that, at a time point at the position H2, the host vehicle H travels in the third travel lane and the other vehicle J approaches the host vehicle H from behind in the second travel lane at the faster speed than that of the host vehicle H.

In step S44 of Fig. 3A, the host vehicle H (the position H2) travels in the third travel lane. Thus, it is determined NO in step S44, and the control flow proceeds to the lane change step in step S70.

### - Lane Change Step -

In step S71, the risk calculation section 133 calculates the risk of the collision with the other vehicle J on the basis of the external environment information acquired by the information acquisition section 30 at the position H1. Here, it is assumed that the other vehicle J approaches the host vehicle H at the faster speed than the speed of the host vehicle H and such a calculation result that the collision risk (the collision score) with the other vehicle J is equal to or higher than the specified level is acquired. In such a case, it is determined YES in next step S72, and the control flow proceeds to step S76.

In step S76, the lane is not changed, and the travel in the travel lane in which the host vehicle H has traveled so far is continued. Then, the control flow proceeds to next step S77.

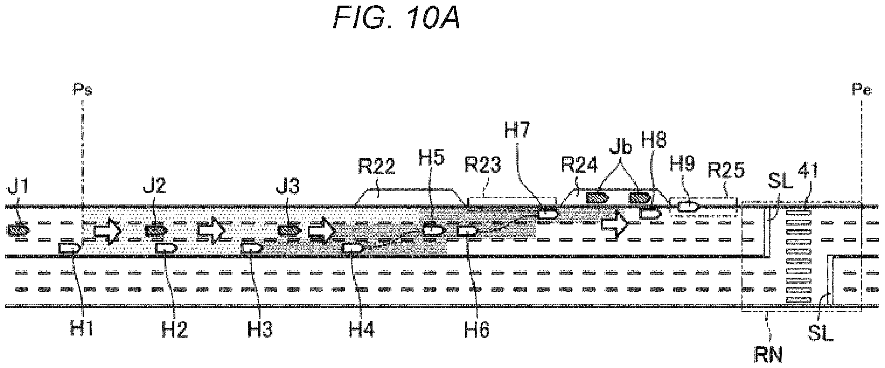

In step S77, it is checked whether the host vehicle H has passed a re-searched reference position. The re-searched reference position is a position that is set on the basis of at which position in the travel lane it is necessary to terminate each of the steps in the case where the host vehicle H is stopped at the emergency stop position. Although the setting method of the re-searched reference position is not particularly limited, for example, it is possible to adopt a method (1) in which a table based on the position and the speed of the host vehicle H is prepared, and the re-searched reference position is set on the basis of the table, or a method (2) in which the calculations are performed in the vehicle by using a vehicle model or the like. In the examples illustrated in Fig. 9 and Fig. 10A, a light dotted area is set as the re-searched reference position for the stoppable area R22. In the case where the host vehicle H passes the light dotted area, the emergency stop position is searched again. Similarly, a dark dotted area is set as the re-searched reference position for the stoppable area R24. In the case where the host vehicle H passes the dark dotted area, the emergency stop position is searched again. In such a case, it is determined NO in step S77, and the control flow returns to step S71. Thereafter, it is assumed that the host vehicle H travels to the position H2 while the other vehicle J travels to a position J2.

In step S71, the risk calculation section 133 calculates the risk of the collision with the other vehicle J on the basis of the external environment information acquired by the information acquisition section 30 at the position H2. As illustrated in Fig. 9, it is assumed that, also at the position H2, such a calculation result that the collision risk (the collision score) with the other vehicle J (the position J2) is equal to or higher than the specified level is acquired. In such a case, in the control flow, it is determined YES in next step S72. Then, in step S74, it is assumed that the host vehicle H travels to the position H3 while the other vehicle J travels to a position J3. That is, it is assumed that the host vehicle H passes the light dotted area and enters the dark dotted area ahead.

In such a case, it is determined YES in step S77. Thus, the lane change step is canceled, and the stop position is set again. More specifically, the emergency stop control section 130 cancels the control process in Fig. 3C, and the control flow returns to step S13 in Fig. 2A.

### - Stop Position Setting Step -

Here, it is assumed that the host vehicle H travels near the position H3 (see Fig. 9) and that the specified target time has not been elapsed. In such a case, in Fig. 2A, it is determined YES in step S13, and it is determined NO in step S14. In addition, since the static evaluation of the road shoulder area has already been made in the initial flow, it is determined YES in step S16, and the control flow proceeds to step S26.

In the case where the specified target time has elapsed at this time point, it is determined NO in step S13, and the control flow proceeds to the travel lane stop step in step S99. The travel lane stop step is similar to that in <<Evacuation Travel Control (2) >>, and thus a detailed description thereon will not be made.

In step S26, the evaluation values related to the dynamic evaluation at the point Pₓ, which is located ahead of the current position of the host vehicle H, in the analysis list L are updated. Fig. 7C illustrates the updated analysis list L2. In Fig. 7C, it is assumed that the stoppable area R22 is located ahead of the host vehicle H and is not the evaluation target (" - " is entered) and that the evaluations other than the dynamic evaluation are the same as those in Fig. 7B.

In next step S30 (see Fig. 2C), the emergency stop position is searched and set. The setting process of the emergency stop position herein is similar to that in <<Evacuation Travel Control (2)>> described above, and the next emergency stop position is set in the stoppable area R24 .

### - Evacuation Route Generation Step -

In step S42, the stop route generation section 132 generates the evacuation route to the emergency stop position, which is set in the stoppable area R24.

### - Deceleration Step -

Since the host vehicle H has already been decelerated to the specified speed or lower, it is determined YES in step S43. Here, the deceleration step is not executed, and the control flow proceeds to next step S44.

### - Lane Change Step -

In step S71 of Fig. 3C, the risk calculation section 133 calculates the risk of the collision with the other vehicle J on the basis of the external environment information acquired by the information acquisition section 30 at the position H3. Here, it is assumed that the other vehicle J (the position J3) travels obliquely ahead of the host vehicle H (the position H2) at the faster speed than that of the host vehicle H. Thus, it is assumed that, at the position H3, such a calculation result that the collision risk (the collision score) is lower than the specified level is acquired.

In such a case, it is determined NO in step S72, and the emergency stop control section 130 changes the lane of the host vehicle H from the third travel lane to the second travel lane (see the position H4 to the position H5 in Fig. 9). Then, when the lane change to the second travel lane is completed, the lane change step in Fig. 3C is terminated once. Thereafter, the control flow returns to step S44 in Fig. 3A, and it is determined NO therein. Then, in step S70 again, the lane change step from the second travel lane to the first travel lane is executed (see a position H6 to a position H7 in Fig. 9) .

### - First Travel Lane Travel Step, Stop Step -

The emergency stop to the stoppable area R24 is similar to that in <<Evacuation Travel Control (2) >> described above, and thus the description thereon will not be made. When the host vehicle H is stopped at the emergency stop position (in the stoppable area R24), the evacuation travel control is terminated.

### <<Evacuation Travel Control (4)>>

The following description will be made on the assumption that the abnormality of the driver is detected when the host vehicle H travels in a travel scene illustrated in Fig. 10A. Similar to the case of <<Evacuation Travel Control (3)>> described above, it is assumed that, at the initiation time point of the control flow in Fig. 3A, the start point Ps and the end point Pe have been set at positions illustrated in Fig. 10A and the analysis list L2 in Fig. 7A has been created.

Here, a description will be centered on different points from <<Evacuation Travel Control (3)>> described above, and thus the common operation to that in <<Evacuation Travel Control (3) >> may not be described. For example, the operation until the host vehicle H reaches the position H7, that is, the operation up to the initiation of the "first travel lane travel step, the stop step" is common to that in <<Evacuation Travel Control (1)>> described above. Thus, a description will herein be made on the operation after the host vehicle H travels to the position H7 and the control process in Fig. 3D is initiated. In addition, it is assumed that another vehicle Jb that stops at the stoppable area R24 is not recognized when the host vehicle H travels at the position H6 and that the other vehicle Jb is recognized for the first time when the host vehicle H reaches the position H7.

### - First Travel Lane Travel Step, Stop Step -

In the example illustrated in Fig. 10A, the stoppable area R24 is recognized when the host vehicle H reaches the position H7, that is, it is determined YES in step S81. Then, since the other vehicle Jb is stopped in the stoppable area R24, it is determined YES in step S85. That is, when the host vehicle H enters the stoppable area R24, the emergency stop control section 130 determines that the collision risk with the other vehicle Ja is equal to or higher than the specified level. As a result, the emergency stop control section 130 cancels the first travel lane travel step, and resets the stop position. More specifically, the emergency stop control section 130 cancels the control process in Fig. 3D, and the control flow returns to step S13 in Fig. 2A.

### - Stop Position Setting Step -

Here, it is assumed that the host vehicle H travels near the position H7 (see Fig. 10A) and that the specified target time has not been elapsed. In such a case, in Fig. 2A, it is determined YES in step S13, and it is determined NO in step S14. In addition, since the static evaluation of the road shoulder area has already been made in the initial flow, it is determined YES in step S16, and the control flow proceeds to step S26.

In the case where the specified target time has elapsed at this time point, it is determined NO in step S13, and the control flow proceeds to the travel lane stop step in step S99. The travel lane stop step is similar to that in <<Evacuation Travel Control (2)>>, and thus a detailed description thereon will not be made.

In step S26, the evaluation values related to the dynamic evaluation at the point Pₓ, which is located ahead of the current position of the host vehicle H, in the analysis list L are updated. Fig. 7D illustrates the updated analysis list L2. In Fig. 7D, "0" is set as the evaluation result of the semi-mobile obstacle for the area R24. As a result, "0" is set as the evaluation value of the road shoulder evaluation in the area R24. Here, it is assumed that the evaluation values in the stoppable area R25 and the restriction area RN are not changed.

In next step S30 (see Fig. 2C), the emergency stop position is searched and set.

In step S31 of Fig. 2C, only R25 is extracted as the stoppable area. As described above, since "0" is set as the evaluation value of the road shoulder evaluation for the area R24, the area R24 is not extracted as the stoppable area.

Since only the stoppable area R25 is extracted, it is determined YES in step S32, and it is determined NO in step S33. Then, in next step S36, the emergency stop position is set in the stoppable area R25, and the stop position setting step is terminated.

### - Evacuation Route Generation Step -

In step S42, the stop route generation section 132 generates the evacuation route to the emergency stop position, which is set in the stoppable area R25.

### - Deceleration Step -

Since the host vehicle H has already been decelerated to the specified speed or lower, it is determined YES in step S43. Here, the deceleration step is not executed, and the control flow proceeds to next step S44.

### - Lane Change Step -

Since the host vehicle H already travels in the first travel lane, it is determined YES in step S44. Here, the lane change step is not executed, and the control flow proceeds to next step S80.

### - First Travel Lane Travel Step, Stop Step -

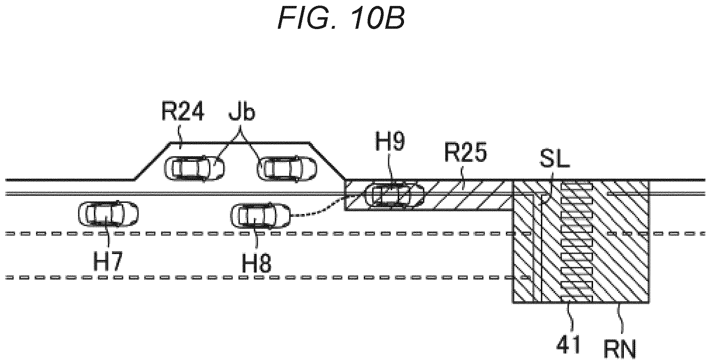

The emergency stop to the stoppable area R25 has the substantially same flow of the stop to the stoppable area R24 in <<Evacuation Travel Control (3) >> described above, and thus the description thereon will not be made. As illustrated in Fig. 10B, when the host vehicle H is stopped at the emergency stop position (in the stoppable area R25), the evacuation travel control is terminated.

As it has been described so far, according to this embodiment, the control section 100 in the vehicle controller 10 is configured to execute: the stop position setting step of setting the stop position for stopping the vehicle on the basis of the information on the road shoulder area R stored in the storage section 20 in the case where the vehicle is stopped emergently; the evacuation route generation step of generating the evacuation route to the stop position; the deceleration step of decelerating the speed of the vehicle to the specified speed or lower; the lane change step of changing the lane of the vehicle from the second travel lane to the free space in the first travel lane on the basis of the external environment information; the first travel lane travel step of causing the vehicle to travel in the first travel lane at the specified speed or lower; and the stop step of causing the entry of the vehicle from the first travel lane to the stop position and stopping the vehicle. In addition, the control section 100 calculates the collision risk of colliding with the obstacle on the road on the basis of the external environment information acquired by the information acquisition section, cancels the step in the case where the step in which the collision risk is equal to or higher than the specified level exists, and sets the stop position for performing the operation in the canceled step onward.

Just as described, the step in which the collision risk of colliding with the obstacle on the road is equal to or higher than the specified level is canceled, and the stop position for performing the operation in the canceled step onward is set. In this way, it is possible to shift the evacuation route to the emergency stop position, which is set once, to the stop position, at which the vehicle can be stopped safely and emergently, and the evacuation route before the collision risk becomes apparent due to a change in a traffic flow thereafter.

### <<Evacuation Travel Control (5)>>

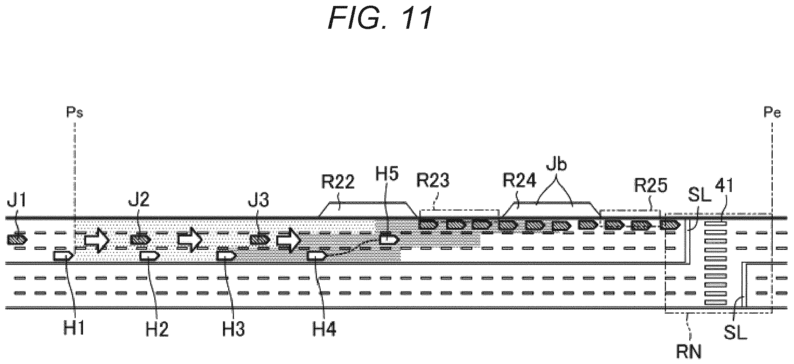

The following description will be made on the assumption that the abnormality of the driver is detected when the host vehicle H travels in a travel scene illustrated in Fig. 11. Similar to the case of <<Evacuation Travel Control (3)>> described above, it is assumed that, at the initiation time point of the control flow in Fig. 3A, the start point Ps and the end point Pe have been set at positions illustrated in Fig. 11 and the analysis list L2 in Fig. 7A has been created.

In Fig. 11, similar to Fig. 9, it is assumed that the host vehicle H travels at the position H2 (the third travel lane) and the other vehicle J approaches the host vehicle H from behind in a second travel lane at the faster speed than that of the host vehicle H. That is, in Fig. 11, a description will be made on control from time at which the control process of the lane change step in Fig. 3C is interrupted, the control flow returns to step S13 in Fig. 2A, and the vehicle travels from the position H2 to the position H3.

In addition, in Fig. 11, it is assumed that heavy traffic occurs from a position behind the crosswalk to the stoppable area R23 in the first travel lane. That is, due to heavy traffic vehicles Jb, it is impossible to stop the host vehicle H in any of the stoppable areas R23, R24, R25. Furthermore, it is assumed that the host vehicle H recognizes existence of the heavy traffic vehicles Jb at a position between the position H2 and the position H3.

### - Stop Position Setting Step -

As described above, when the control process returns to step S13 in Fig. 2A, the host vehicle H travels between the position H2 and the position H3 (see Fig. 11). Thus, it is determined YES in step S13, and it is determined NO in step S14. In addition, since the static evaluation of the road shoulder area has already been made in the initial flow, it is determined YES in step S16, and the control flow proceeds to step S26.

In step S26, the evaluation values related to the dynamic evaluation at the point Px, which is located ahead of the current position of the host vehicle H, in the analysis list L are updated. Fig. 7E illustrates the updated analysis list L2. Similar to the case of Fig. 7C, in Fig. 7E, the stoppable area R22 is not the evaluation target ("-" is entered). In addition, due to the existence of the heavy traffic vehicles Jb, the evaluation values of the mobile object evaluation at positions corresponding to the stoppable areas R23, R24, R25 are set to "0". As a result, the evaluation values of the road shoulder evaluation are set to "0" for all of the stoppable areas R22 to R25.

In next step S30 (see Fig. 2C), the emergency stop position is searched and set. In step S31 of Fig. 2C, the analysis list L2 in Fig. 7E are read from the storage section 20. As described above, the evaluation values of the road shoulder evaluation are "0" for all of the stoppable areas R22 to R25. Thus, it is determined NO in next step S32, and the control flow proceeds to step S90. In other words, in the case where the host vehicle H is evacuated to the road shoulder area before reaching to the end point Pe, the host vehicle H collides with the other vehicle. Thus, the emergency stop control section 130 cancels the generation of the evacuation route to the road shoulder area, and executes the travel lane stop step (step S99) of stopping the host vehicle H in the travel lane.

### - Travel Lane Stop Step -

In step S99, the emergency stop control section 130 stops the host vehicle H in the travel lane. The determination method of the stop lane in which the host vehicle H is stopped and the determination method of the stop position in the selected travel lane are not particularly limited.

For example, at a time point at which it is found out that the host vehicle H cannot be stopped in the road shoulder area, the rear traffic condition is checked. In the case where the risk of the collision with the other vehicle J is low, the host vehicle H may promptly be decelerated and stopped at the current position. Alternatively, for example, control may be executed to move the host vehicle H to the travel lane near the road shoulder area R and stop the host vehicle H if possible before the host vehicle H reaches the end point Pe. Further alternatively, an index may be provided to evaluate the collision risk quantitatively, and the stop lane and the stop position may be determined on the basis of the index. As the above index, for example, the risk calculation section 133 may use the collision risk value that is calculated from the product of the first risk value and the second risk value. A specific description on the first risk value and the second risk value will be made below.

The emergency stop control section 130 sets the plural candidate stop positions in the free space behind the end point Pe. The risk calculation section 133 calculates the above collision risk value for each of the candidate stop positions. Then, the emergency stop control section 130 determines, as the stop position, the candidate stop position with the low collision risk value, which is calculated by the risk calculation section 133.

### (Calculation of Collision Risk Value)

A description will herein be made on an example in which the collision risk value is calculated from the product of the first risk value and the second risk value. As described above, the first risk value is set for the candidate stop position, and the second risk value is set for the behavior of the host vehicle H until the host vehicle H reaches the candidate stop position.

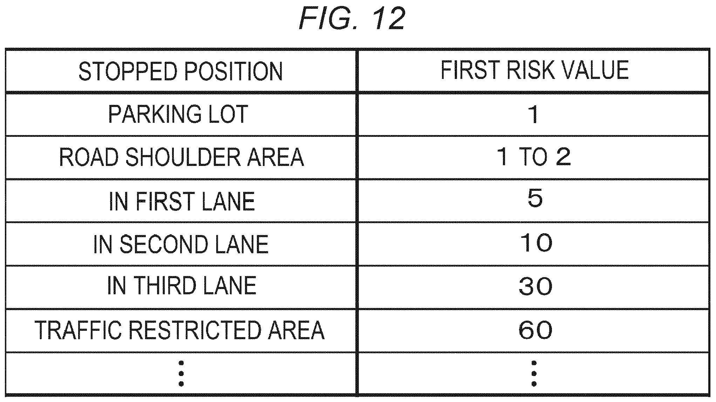

Fig. 12 is a table illustrating an example of the first risk values. Here, as illustrated in Fig. 12, the first risk value for the parking lot is set to be the lowest. For example, the first risk value for the road shoulder area is set to be equal to or higher than that for the parking lot according to a margin of the width of the road shoulder area with respect to the vehicle width. The first risk value is basically set to have the lower value as the stop position is relatively closer to the road shoulder area. That is, for example, in the case where plural travel lanes are provided in an open road, the first risk value of the travel lane on the relatively left side (for example, the first travel lane) is set to be lower than the first risk value of the travel lane on the relatively right side (for example, the second travel lane). In order to prevent the intersection from becoming the final stop position in principle, even in the case where a product of a minimum value of the second risk value and the first risk value is calculated, the first risk value of the intersection is set to a value that is equal to or higher than an upper limit threshold, which will be described below. The parking lot includes an emergency evacuation space and includes a parking lot for a store and the like.

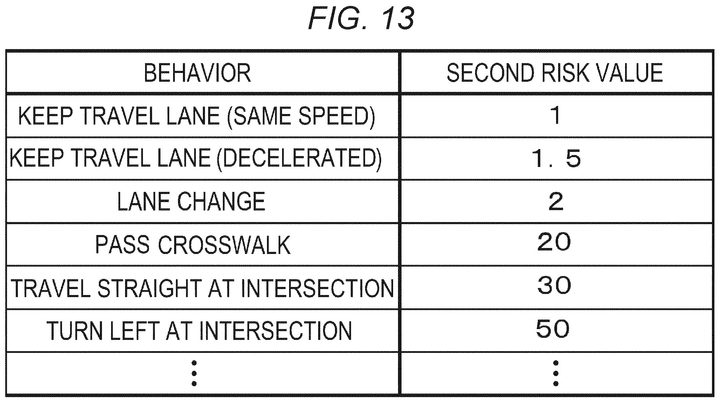

Fig. 13 is a table illustrating an example of the second risk values. As illustrated in Fig. 4, the second risk value is set to the lowest value in the case where the host vehicle H keeps traveling in the current travel lane without changing the speed thereof. Next, as the behavior with the low risk value, the deceleration in the same travel lane is set. This is because the collision risk with the following vehicle is slightly increased by the deceleration in comparison with a case where the host vehicle H keeps traveling at the same speed. In addition, the risk value of the lane change is set to the higher value than those of the travel in the same travel lane and the deceleration due to a reason that the collision risk with the following vehicle is slightly increased. When the host vehicle H passes the crosswalk or passes the intersection, the second risk value is set to a slightly high value. This is because of a possibility of a collision with the pedestrian or the other vehicle at the intersection or the crosswalk. From a similar perspective, the second risk value is set to be relatively high when the host vehicle H turns to the left or right in comparison with a case where the host vehicle H travels straight at the intersection. When the risk calculation section 133 calculates the collision risk value, the second risk values of all the types of the behavior of the host vehicle H up to the candidate stop position are taken into consideration.

The first risk values illustrated in Fig. 12 and the second risk values illustrated in Fig. 13 constitute one example and may be set appropriately. Alternatively, an upper limit reference value may be set for the collision risk value. A place where the collision risk value exceeds the upper limit reference value may not be set as the stop position even in the case where such a position is the free space. The upper limit reference value is set to "60", for example.

Next, although not illustrated, a specific example of calculating the collision risk value will be described.

For example, it is assumed that, after the vehicle located in the third travel lane travels straight and passes the crosswalk, a parking lot provided on the road shoulder area side of the first travel lane is set as the first candidate stop position. At this time, the host vehicle H is decelerated, changes the travel lane from the third travel lane to the first travel lane, passes the crosswalk, enters the parking lot, and is stopped. In such a case, the second risk value is 1.5 × 2 × 2 × 20 = 120. Since the first risk value of the parking lot is "1", the collision risk value at the first candidate stop position is 120 × 1 = 120.

For example, a case where the vehicle traveling in the third travel lane changes the travel lane to the first travel lane, and is stopped in the first travel lane as a second candidate stop position is considered. Since the vehicle changes the travel lane twice, the second risk value at this time is 1.5 × 2 × 2 = 6. Meanwhile, the first risk value in the first travel lane is "5". Thus, the collision risk value at the second candidate stop position is 6 × 5 = 30.

For example, a case where the vehicle traveling in the third travel lane is stopped in the third travel lane without changing the travel lane as a third candidate stop position is considered. The second risk value at this time is "1.5". Meanwhile, the first risk value in the third travel lane is "30". Thus, the collision risk value at the third candidate stop position is 1.5 × 30 = 45.

For example, in the case where the third candidate stop position is recognized as the free space, where the vehicle can be parked emergently, from the above first candidate stop position, the emergency stop control section 130 determines the second candidate stop position as the emergency stop position.

Next, a description will be made on the travel scene in Fig. 11.

In Fig. 11, the emergency stop control section 130 searches for the free space in the travel lane on the basis of the external environment information acquired by the information acquisition section 30 (for example, the cameras 31 and the radars 32). Here, it is assumed that the host vehicle H travels at the position H3 and the second travel lane and the third travel lane are recognized as the free spaces.

In such a case, the risk calculation section 133 calculates the collision risk value for each of a case where the host vehicle H is stopped in the third travel lane without changing the travel lane and a case where the host vehicle H changes the travel lane to the second travel lane and is stopped.

In the case where the host vehicle H is stopped in the third travel lane without changing the travel lane, the first risk value is "30" (see Fig. 12). In addition, since the host vehicle H is stopped in the same lane, the second risk value is "1" (see Fig. 13). Thus, the collision risk value at the third candidate stop position is 30 × 1 = 30.

In the case where the host vehicle H changes the travel lane to the second travel lane and is stopped, due to the stop in the second travel lane, the first risk value is "10". In addition, since the travel lane is changed once, the second risk value is "2" . Thus, the collision risk value at the third candidate stop position is 10 × 2 = 20.

The emergency stop control section 130 receives the calculation results from the risk calculation section 133 and sets the second travel lane as the emergency stop position. Then, similar to the cases of Fig. 9 and Fig. 10A, the emergency stop control section 130 changes the travel lane of the host vehicle H from the third travel lane (the position H4) to the second travel lane (the position H5), and stops the host vehicle H after the lane change.

As it has been described so far, according to <<Evacuation Travel Control (5)>>, in the process of the evacuation travel control for evacuating the host vehicle H to the road shoulder area R, the emergency stop control section 130 calculates the collision risk with the on-road obstacle on the basis of the external environment information acquired by the information acquisition section 30 (for example, the cameras 31 and the radars 32). Then, in the case where the collision risk is equal to or higher than the specified level, the emergency stop control section 130 cancels the evacuation route generation step and stops the host vehicle H in the travel lane. In this way, it is possible to avoid the extension of the time required to stop the vehicle emergently.

### <<Evacuation Travel Control (6)>>

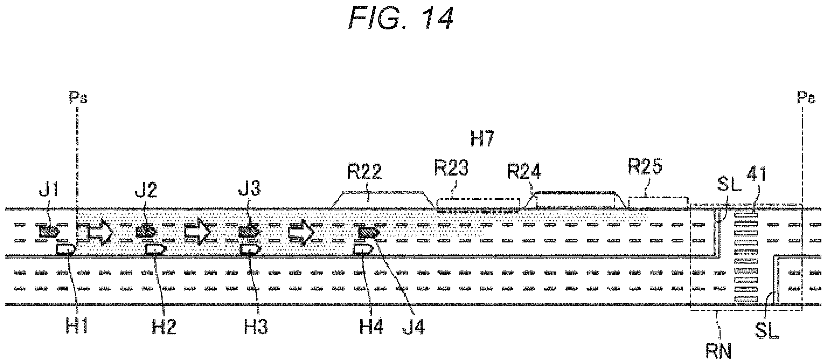

The following description will be made on the assumption that the abnormality of the driver is detected when the host vehicle H travels in a travel scene illustrated in Fig. 14.

In this control example, it is assumed that, as the specified target time, in addition to the total target time required to automatically stop the vehicle, an intermediate target time is set as a target time required to complete the lane change. The setting method of the intermediate target time is not particularly limited. For example, the intermediate target time is set on the basis of time at which the lane change has to be completed in order to stop the host vehicle H at the stop position set by the stop position determination section 131. Instead of the intermediate target time, an intermediate target point may be set.

For example, in Fig. 14, when the host vehicle H passes a dotted area, it is difficult to stop the host vehicle H in R25 as the farthest stoppable area. In such a case, the intermediate target time or the intermediate target point is set on the basis of a point at which the host vehicle H leaves the dotted area or a predicted time for the host vehicle H to travel to such a point.

In addition, in this control example, it is assumed that the start point Ps and the end point Pe are set at positions illustrated in Fig. 14, that the creation of the analysis list L2 in Fig. 7A is completed, and that the first emergency stop position is set in the stoppable area R22. Then, it is assumed that the deceleration step of the host vehicle H is terminated at a time point at the position H1, that is, the execution of the processing in step S60 of Fig. 3A is completed. Furthermore, it is assumed that the host vehicle H travels in the third travel lane and the other vehicle J approaches the host vehicle H from behind in the second travel lane at the substantially same speed.

In step S44, the host vehicle H travels at the position H1. Thus, it is determined NO in step S44, and the control flow proceeds to the lane change step.

### - Lane Change Step -

In step S71 of Fig. 3C, since the other vehicle J is located on a side of the host vehicle H, such a calculation result that the collision risk (the collision score) with the other vehicle J is equal to or higher than the specified level is generated. In such a case, it is determined YES in next step S72, and the control flow proceeds to step S76. Then, when the host vehicle H passes the re-searched reference position, it is determined NO in step S77, and the control flow returns to step S13 in Fig. 2A.

### - Stop Position Setting Step, Evacuation Route Generation Step -

Here, it is assumed that the host vehicle H travels near the position H2 (see Fig. 14). Thus, the host vehicle H has not passed the dotted area, that is, the specified intermediate target time has not been elapsed. In such a case, in Fig. 2A, it is determined YES in step S13, and it is determined NO in step S14. In addition, since the static evaluation of the road shoulder area has already been made in the initial flow, it is determined YES in step S16, and the control flow proceeds to step S26.

Then, the stop position setting step and the evacuation route generation step are executed. Similar to the case of <<Evacuation Travel Control (3)>> described above, the next emergency stop position is set in the stoppable area R24, and the route to the stoppable area R24 is generated.

Similarly, the host vehicle H passes the re-searched reference position in the stoppable area R24, and passes the re-searched reference position in the stoppable area R25. That is, due to the existence of the other vehicle J, the host vehicle H passes the dotted area.

In such a case, it is determined NO in step S13 of Fig. 2. The emergency stop control section 130 stops the host vehicle H as soon as possible in the travel lane. For example, in the example illustrated in Fig. 14, the emergency stop control section 130 stops the host vehicle H at the position H4.

As it has been described so far, according to <<Evacuation Travel Control (6)>>, in the case where the specified intermediate target time does not elapse or the host vehicle H does not reach the specified intermediate target point in a period from the initiation of the evacuation travel control to the lane change, the emergency stop control section 130 stops the host vehicle H in the travel lane. In this way, it is possible to make the safe evacuation travel and stop the vehicle safely according to the traffic condition. For example, when the vehicle is headed for the road shoulder area in the automated driving, such travel becomes unsafe depending on the traffic condition. However, by executing the above control, it is possible to formulate an optimum vehicle travel control plan. In addition, since the vehicle is stopped promptly, the driver can further promptly receive a support from the others for his/her abnormality.

The above-described embodiment is merely illustrative, and thus the scope of the present disclosure should not be interpreted in a restrictive manner.

For example, in the above embodiment, the description has been made on the example in which the collision risk value, which is based on the product of the first risk value and the second risk value, is used after it is found out that the vehicle cannot be stopped in the road shoulder area. However, the present disclosure is not limited thereto. For example, the road shoulder area may be analyzed to create the analysis list, and the analysis list and, the result of the product of the first risk value and the second risk value may be determined comprehensively to extract the stoppable area.

### [Industrial Applicability]

The technique disclosed herein is useful as the vehicle travel controller including the travel control section that generates the target route to the target position on the basis of the external environment information recognized by the exterior environment recognition means and controls the vehicle such that the vehicle travels on the target route.

### [Description of Reference Signs and Numerals]

- 10: vehicle controller
- 100: control section
- 20: storage section
- 30: information acquisition section
- R: road shoulder area

## Claims

1. A vehicle controller (10) configured to control a vehicle, the vehicle controller comprising:
a storage section (20) configured to store road information on a road ahead of the vehicle in an advancing direction; and
a control section (100) configured to execute evacuation travel control for generating an evacuation route to evacuate the vehicle to an evacuation position in a road shoulder area along an end of a road in a width direction on the basis of the road information stored in the storage section (20) and for controlling travel of the vehicle such that the vehicle travels on the evacuation route, wherein
in the case where the vehicle does not reach the evacuation position within a specified target time from initiation of the evacuation travel control, the control section (100) is configured to stop the vehicle in a travel lane.

2. The vehicle controller (10) according to claim 1, wherein
the control section (100) is configured to execute the evacuation travel control in the case where abnormality occurs to a driver of the vehicle, and
the evacuation travel control is for controlling the vehicle such that the vehicle travels on the evacuation route while avoiding an on-road obstacle.

3. The vehicle controller (10) according to claim 1 or 2, wherein
in the case where the target time has elapsed from the initiation of the evacuation travel control before the vehicle reach the evacuation position, the control section (100) is configured to stop the vehicle in the travel lane.

4. The vehicle controller (10) according to any one of the preceding claims, wherein
the control section (100) is configured to set the evacuation position in the road shoulder area within a range where the vehicle can reach when traveling for a specified time or a specified distance in an advancing direction from initiation of the evacuation travel control.

5. The vehicle controller (10) according to any one of the preceding claims, wherein
in the evacuation travel control, the control section (100) is configured to executes: a first step of decelerating a speed of the vehicle to a specified speed or lower; a second step of changing a travel lane of the vehicle to a first travel lane in the case where the vehicle travels in the travel lane other than the first travel lane that is next to the road shoulder area; a third step of causing the vehicle to travel in the first travel lane at the specified speed or lower; and a fourth step of causing the vehicle to enter the road shoulder area from the first travel lane and stopping the vehicle, and

6. The vehicle controller (10) according to claim 5, wherein
the control section (100) is configured to set an intermediate target time in the second step, and
in the case where the second step is not terminated in the intermediate target time, the control section (100) is configured to cancel the second step and stop the vehicle in the travel lane.

7. The vehicle controller (10) according to claim 5 or 6, wherein
the control section (100) is configured to set an intermediate target time in the third step, and
in the case where the third step is not terminated in the intermediate target time, the control section (100) is configured to cancel the third step and stop the vehicle in the travel lane.

8. The vehicle controller (10) according to claim 6 or 7, wherein
the intermediate target time is shorter than the specified target time.

9. The vehicle controller (10) according to any one of the preceding claims, further comprising an occupant state sensor (35) configured to detect a state of the driver, wherein
the control section (100) is configured to detect an abnormal physical condition of the driver from the output of the occupant state sensor (35), and particularly
the abnormal physical condition includes at least one of a brain disorder, a cerebral stroke, a cardiac disorder, myocardial infarction, epilepsy, and hypoglycemia.

10. The vehicle controller (10) according to claim 9, wherein
the occupant state sensor (35) includes in-vehicle camera configured to acquire image data of the driver.

11. The vehicle controller (10) according to any one of the preceding claims, wherein the specified target time is a fixed time or constant.

12. The vehicle controller (10) according to any one of the preceding claims, wherein the specified target time is variable.

13. The vehicle controller (10) according to any one of the preceding claims, further comprising at least one of:
a camera (31) configured to capture an image of environment around the vehicle including an on-road obstacle, and/or configured to acquire image data on the environment around the vehicle; and
a radar (32) configured to detect the environment around the vehicle.

14. The vehicle controller (10) according to claim 13, wherein
the control section (100) is configured to use the output of the camera (31) and/or the radar (32) so as to generate an evacuation route avoiding the on-road obstacle.

15. A vehicle comprising the vehicle controller (10) according to any one of the preceding claims.
